(19) Europäisches Patentamt
European Patent Office
Office européen des brevets

(11) **EP 4 099 343 A1**

(12) **EUROPEAN PATENT APPLICATION**
published in accordance with Art. 153(4) EPC

(43) Date of publication:
**07.12.2022 Bulletin 2022/49**

(51) International Patent Classification (IPC):
*H01B 7/00* [(2006.01)]    *H01B 13/00* [(2006.01)]
*H01M 50/50* [(2021.01)]    *H02K 3/30* [(2006.01)]
*H02K 3/38* [(2006.01)]    *H02K 3/50* [(2006.01)]

(21) Application number: **21747321.4**

(52) Cooperative Patent Classification (CPC):
**H01B 7/00; H01B 13/00; H01M 50/50; H02K 3/30; H02K 3/38; H02K 3/50;** Y02E 60/10

(22) Date of filing: **29.01.2021**

(86) International application number:
**PCT/JP2021/003378**

(87) International publication number:
**WO 2021/153778 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2020 JP 2020015523**
          **31.01.2020 JP 2020015522**

(71) Applicant: **Mitsui Chemicals, Inc.**
**Tokyo 105-7122 (JP)**

(72) Inventors:
• **KIMURA, Kazuki**
**Sodegaura-shi, Chiba 299-0265 (JP)**
• **TORII, Tomoki**
**Tokyo 105-7122 (JP)**
• **TOMINAGA, Takahiro**
**Sodegaura-shi, Chiba 299-0265 (JP)**

• **MORIMOTO, Kai**
**Sodegaura-shi, Chiba 299-0265 (JP)**
• **NAKAJIMA, Shinji**
**Sodegaura-shi, Chiba 299-0265 (JP)**
• **WASHIO, Isao**
**Sodegaura-shi, Chiba 299-0265 (JP)**
• **SHIMBORI, Nobuyoshi**
**Sodegaura-shi, Chiba 299-0265 (JP)**
• **SHIMAZAKI, Junya**
**Sodegaura-shi, Chiba 299-0265 (JP)**
• **ZHANG, Jingjun**
**Sodegaura-shi, Chiba 299-0265 (JP)**
• **AMANO, Akinori**
**Sodegaura-shi, Chiba 299-0265 (JP)**
• **DOI, Haruka**
**Sodegaura-shi, Chiba 299-0265 (JP)**

(74) Representative: **J A Kemp LLP**
**80 Turnmill Street**
**London EC1M 5QU (GB)**

(54) **MEMBER FOR ELECTRIC CONDUCTION, METHOD FOR MANUFACTURING MEMBER FOR ELECTRIC CONDUCTION, POWER CONVERSION DEVICE, MOTOR, SECONDARY BATTERY MODULE, AND SECONDARY BATTERY PACK**

(57) A member for electric conduction, comprising a metal member and a resin member that is joined to at least a part of a surface of the metal member, the metal member having a roughness index, which is obtained by dividing a true surface area ($m^2$) measured by a krypton adsorption method by a geometric surface area ($m^2$), of 4.0 or more.

FIG. 1

**Description**

[Technical Field]

The present invention relates to a member for electric conduction, a method for manufacturing a member for electric conduction, a power conversion device, a motor, a secondary battery module, and a secondary battery pack.

[Background Art]

As a means for supplying a large capacity of electric current to electric conversion devices, motors, secondary battery modules, secondary battery packs and the like, a member for electric conduction, which is referred to as a bus bar, is widely used.
For example, Patent Document 1 describes a bus bar unit having a bus bar that is formed by inserting a contact pin made of metal into a resin material.

[Prior Art Document]

[Patent Document]

Patent Document 1: Japanese Patent Application Laid-Open No. 2007-209101

[Summary of the Invention]

[Problem to be Solved by the Invention]

The bus bar described in Patent Document 1 is prepared by injection molding by inserting a contact pin into a resin material. However, the state of joining between the resin material and the contact pin is not considered in detail. If the resin material and the contact pin are not sufficiently joined, oil leakage or a short circuit may occur and affect the reliability of the bus bar. Further, the bus bar may require a sufficient degree of tracking resistance depending on the type of usage.
In view of the foregoing, an embodiment of the present disclosure aims to provide a member for electric conduction with excellent airtightness, a method for manufacturing a member for electric conduction, a power conversion device, a motor, a secondary battery module, and a secondary battery pack.
Another embodiment of the present disclosure aims to provide a member for electric conduction with excellent airtightness and excellent tracking resistance, a method for manufacturing a member for electric conduction, a power conversion device, a motor, a secondary battery module, and a secondary battery pack.

[Means for Solving the Problem]

The means for solving the problem includes the following embodiments.

<1> A member for electric conduction, comprising a metal member and a resin member that is joined to at least a part of a surface of the metal member,
the metal member having a roughness index, which is obtained by dividing a true surface area ($m^2$) measured by a krypton adsorption method by a geometric surface area ($m^2$), of 4.0 or more.
<2> The member for electric conduction according to <1>, wherein the roughness index of the metal member is 10.0 or more.
<3> The member for electric conduction according to <1> or <2>, wherein the roughness index of the metal member is less than 10.0, and the resin member comprises a resin having a linear expansion coefficient of 50 ppm/K or less.
<4> The member for electric conduction according to any one of <1> to <3>, wherein the resin member comprises a polyamide resin having an aromatic group and an aliphatic group.
<5> The member for electric conduction according to <4>, wherein the resin member further comprises an acid-modified polyolefin.
<6> The member for electric conduction according to <4> or <5>, wherein the polyamide resin comprises a p-phenylene group as the aromatic group and an aliphatic group having from 4 to 20 carbon atoms as the aliphatic group.
<7> The member for electric conduction according to any one of <4> to <6>, wherein the polyamide resin comprises at least two kinds of the aromatic group or at least two kinds of the aliphatic group.
<8> The member for electric conduction according to any one of <4> to <7>, wherein the polyamide resin comprises an m-phenylene group as the aromatic group.

<9> The member for electric conduction according to any one of <4> to <8>, wherein the polyamide resin comprises a side-chain alkylene group having from 4 to 20 carbon atoms as the aliphatic group.

<10> The member for electric conduction according to any one of <4> to <9>, wherein the polyamide resin comprises, with respect to a total of 100 mol% of the aromatic group, from 40 mol% to 100 mol% of a p-phenylene group and from 0 mol% to 60 mol% of an m-phenylene group.

<11> The member for electric conduction according to any one of <4> to <10>, wherein the polyamide resin comprises, with respect to a total of 100 mol% of the aliphatic group, from 0 mol% to 60 mol% of a side-chain alkylene group having from 4 to 20 carbon atoms.

<12> The member for electric conduction according to any one of <1> to <11>, wherein the metal member comprises at least one metal selected from the group consisting of copper, aluminum, copper alloy and aluminum alloy.

<13> The member for electric conduction according to any one of <1> to <12>, wherein the metal member has a plated layer at at least a portion at which the metal member is not joined to the resin member.

<14> The member for electric conduction according to any one of <1> to <13>, wherein the metal member does not have a plated layer at a portion at which the metal member is joined to the resin member.

<15> The member for electric conduction according to any one of <1> to <14>, wherein the resin member comprises a first resin member that is joined to at least a part of a surface of the metal member, and a second resin member that covers a border between the metal member and the first resin member.

<16> A method for manufacturing a member for electric conduction, the method comprising:

performing a roughening treatment on at least a part of a surface of a metal member; and
forming a resin member at at least a part of the surface of the metal member that has been subjected to the roughening treatment.

<17> A method for manufacturing a member for electric conduction, the method comprising:

performing a roughening treatment on at least a part of a surface of a metal member;
forming a first resin member at at least a part of a surface of a metal member that has been subjected to a roughening treatment; and
forming a second resin member that covers a border between the metal member and the first resin member.

<18> The method for manufacturing a member for electric conduction according to <16> or <17>, the method further comprising applying a plated layer to at least a part of a portion of the metal member at which the metal member is not joined to the resin member.

<19> An electric conversion device, comprising the member for electric conduction according to any one of <1> to <15>.

<20> A motor, comprising the member for electric conduction according to any one of <1> to <15>.

<21> A secondary battery module, comprising the member for electric conduction according to any one of <1> to <15>.

<22> A secondary battery pack, comprising the member for electric conduction according to any one of <1> to <15>.

<23> A member for electric conduction, comprising a metal member and a resin member that is joined to at least a part of a surface of the metal member,
the resin member comprising a polyamide resin having an aromatic group and an aliphatic group.

<24> The member for electric conduction according to <23>, wherein the polyamide resin comprises a p-phenylene group as the aromatic group and an aliphatic group having from 4 to 20 carbon atoms as the aliphatic group.

<25> The member for electric conduction according to any one of <23> to <24>, wherein the polyamide resin comprises at least two kinds of the aromatic group or at least two kinds of the aliphatic group.

<26> The member for electric conduction according to any one of <23> to <25>, wherein the polyamide resin comprises an m-phenylene group as the aromatic group.

<27> The member for electric conduction according to any one of <23> to <26>, wherein the polyamide resin comprises a side-chain alkylene group having from 4 to 20 carbon atoms as the aliphatic group.

<28> The member for electric conduction according to any one of <23> to <27>, wherein the polyamide resin comprises, with respect to a total of 100 mol% of the aromatic group, from 40 mol% to 100 mol% of a p-phenylene group and from 0 mol% to 60 mol% of an m-phenylene group.

<29> The member for electric conduction according to any one of <23> to <28>, wherein the polyamide resin comprises, with respect to a total of 100 mol% of the aliphatic group, from 0 mol% to 60 mol% of a side-chain alkylene group having from 4 to 20 carbon atoms.

<30> The member for electric conduction according to any one of <23> to <29>, having a tracking resistance measured by a method as specified in IEC 60112 of 200 V or more.

<31> The member for electric conduction according to any one of <23> to <30>, having a shear strength measured by a method as specified in ISO 19095 of 20 MPa or more.

<32> The member for electric conduction according to any one of <23> to <31>, wherein the metal member has a plated layer at at least a portion at which the metal member is not joined to the resin member.

<33> The member for electric conduction according to any one of <23> to <32>, wherein the metal member does not have a plated layer at a portion at which the metal member is joined to the resin member.

<34> The member for electric conduction according to any one of <23> to <33>, wherein the resin member comprises a first resin member that is joined to at least a part of a surface of the metal member, and a second resin member that covers a border between the metal member and the first resin member.

<35> A method for manufacturing the member for electric conduction according to any one of <23> to <35>, the method comprising:

performing a roughening treatment on at least a part of a surface of a metal member; and
forming a resin member at at least a part of the surface of the metal member that has been subjected to the roughening treatment.

<36> The method according to <35>, the method comprising:

performing a roughening treatment on at least a part of a surface of a metal member;
forming a first resin member at at least a part of a surface of a metal member that has been subjected to a roughening treatment; and
forming a second resin member that covers a border between the metal member and the first resin member.

<37> The method according to <35> or <36>, the method further comprising applying a plated layer to at least a part of a portion of the metal member at which the metal member is not joined to the resin member.

<38> An electric conversion device, comprising the member for electric conduction according to any one of <23> to <34>.

<39> A motor, comprising the member for electric conduction according to any one of <23> to <34>.

<40> A secondary battery module, comprising the member for electric conduction according to any one of <23> to <34>.

<41> A secondary battery pack, comprising the member for electric conduction according to any one of <23> to <34>.

[Effect of the Invention]

According to an embodiment of the present disclosure, a member for electric conduction with excellent airtightness, a method for manufacturing a member for electric conduction, a power conversion device, a motor, a secondary battery module, and a secondary battery pack are provided.

According to another embodiment of the present disclosure, a member for electric conduction with excellent airtightness and excellent tracking resistance, a method for manufacturing a member for electric conduction, a power conversion device, a motor, a secondary battery module, and a secondary battery pack are provided.

[Brief Explanation of the Drawings]

Fig. 1 is a schematic sectional view of an exemplary configuration of a member for electric conduction.
Fig. 2 is a perspective view of a part of the member for electric conduction shown in Fig. 1.

[Embodiments for Implementing the Invention]

In the present disclosure, a numerical range indicated using "to" includes the numerical values before and after "to" as a minimum value and a maximum value, respectively.

In numerical ranges stated in a stepwise manner in the present disclosure, the upper limit value or the lower limit value stated in one numerical range may be replaced with the upper limit value or the lower limit value of another numerical range stated in a stepwise manner. Further, in the numerical range stated in the present disclosure, the upper limit value or the lower limit value of the numerical range may be replaced with the value shown in the examples.

In the present disclosure, each component may contain a plurality of substances corresponding thereto. When a plurality of substances corresponding to each component is present in the composition, the content of each component refers to the total content of the plurality of substances present in the composition, unless otherwise specified.

<Member for electric conduction (First Embodiment)>

The member for electric conduction according to the first embodiment of the present disclosure is a member for electric conduction, comprising a metal member and a resin member that is joined to at least a part of a surface of the metal member, the metal member having a roughness index, which is obtained by dividing a true surface area (m$^2$) measured by a krypton adsorption method by a geometric surface area (m$^2$), of 4.0 or more.

The member for electric conduction as described above has a roughness index of 4.0 or more. Specifically, the metal member has a fine concave-convex structure formed at a surface thereof. Therefore, the resin member is tightly joined to the metal member by entering the concave-convex structure to exhibit an anchoring effect. As a result, the member for electric conduction exhibits a high degree of airtightness at an interface of the metal member and the resin member, and excellent reliability as a member for electric conduction.

From the viewpoint of increasing the bonding strength of the metal member and the resin member, the roughness index is preferably 10.0 or more, more preferably 25.0 or more, further preferably 50.0.

The upper limit of the roughness index is not particularly limited. From the viewpoint of ease of introducing the resin member into a concave-convex structure of the metal member, the roughness index may be any of 150.0 or less, 125.0 or less, or 100.0 or less.

In the present disclosure, the geometric surface area of the metal member is a value calculated from the dimension of an object to be measured. For example, when the object has a rectangular shape with a length X, a width Y and a height Z, the geometric surface area S of the object is given by the following formula.

$$S = 2XY + 2YZ + 2ZX$$

In the present disclosure, the true surface area of the metal member is a value measured by a krypton adsorption method. The measurement of the true surface area is performed by a method described in the Examples.

The metal member may have a value obtained by multiplying the specific surface area (m$^2$/g) of a sample having a geometric surface area of 14.33 cm$^2$, measured by a krypton adsorption method, by the density of the sample (g/m$^3$) of 30,000 m$^{-1}$ or more.

When the value obtained by multiplying the specific surface area (m$^2$/g) by the density of the sample (g/m$^3$) is 30,000 m$^{-1}$ or more, a sufficient amount of fine concave-convex structure is formed at a surface of the metal member, thereby achieving tight joint of the metal member to the resin member.

From the viewpoint of increasing the joint strength of the metal member to the resin member, the value obtained by multiplying the specific surface area (m$^2$/g) by the density of the sample (g/m$^3$) is preferably 50,000 m$^{-1}$ or more, more preferably 100,000 m$^{-1}$ or more.

The upper limit of the roughness index A is not particularly limited. From the viewpoint of ease of introducing the resin member into a concave-convex structure of the metal member, the value may be 2,000,000 m$^{-1}$ or less.

In the present disclosure, the specific surface area (m$^2$/g) of the metal member is a value obtained by a krypton adsorption method. The measurement of the specific surface area is performed by a method described in the Examples.

(Metal member)

The metal member included in the member for electric conduction is not particularly limited as long as it has electrical conductivity, and may be selected from commonly used materials. From the viewpoint of electrical conductivity and heat dissipation, the metal member preferably includes at least one metal selected from the group consisting of copper, aluminum, copper alloy and aluminum alloy. The metal member may include a single kind of metal or two or more kinds thereof. The metal member may have a plated layer at at least a part of a surface thereof.

The metal member is joined to the resin member at at least a part of a surface of the metal member. In the present disclosure, the "join" refers to a state in which a resin portion is integrated with a surface of a metal portion without using an adhesive, a screw or the like.

The method for adjusting the roughness index at a surface of the metal member to be 4.0 or more is not particularly limited, and may be performed by a known roughening process.

Examples of the method include a method using laser light as described in Japanese Patent No. 4020957; a method of immersing a surface of the metal member in an aqueous solution of an inorganic base such as NaOH or an inorganic acid such as HCl or HNO$_3$; a method of subjecting a surface of the metal member to anodization as described in Japanese Patent No. 4541153; a substitution crystallization method in which a surface of the metal member is etched with an aqueous solution including an acid-based etchant (preferably an inorganic acid, ferric ion or cupric ion) and optionally including manganese ions, aluminum chloride hexahydrate, sodium chloride or the like, as described in International Publication No. 2015/8847; a method of immersing a surface of the metal member in an aqueous solution of at least one selected from hydrazine hydrate, ammonia or a water-soluble amine compound (hereinafter, also referred to as an NMT method), as described in International Publication No. 2009/31632; a method of treating a surface of the metal member with a warm water, as described in JP-A No. 2008-162115; and a blast treatment.

It is possible to select a method for roughening depending on the material for the metal member, desired specific surface roughness, and the like.

Among these methods, from the viewpoint of achieving a roughness index at a surface of the metal member of 4.0 or more, a treatment with an acid-based etchant is preferred.

Specific examples of the treatment with an acid-based etchant include a method in which the following processes (1) to (4) are performed in this order.

(1) Pre-treatment

In order to remove a film of an oxide, a hydroxide or the like from a surface of the metal member, the metal member is subjected to pre-treatment. The pre-treatment is generally performed by mechanical polishing or chemical polishing. When the metal member is significantly contaminated with machine oil or the like at a surface to be joined to the resin member, it is possible to perform a treatment with an alkali aqueous solution containing sodium hydroxide, potassium hydroxide or the like, or a treatment for defatting.

(2) Treatment with zinc ion-containing alkali aqueous solution.

The metal member after being subjected to the pretreatment is immersed in a zinc ion-containing alkali aqueous solution to form a zinc-containing film at a surface thereof. The Zn ion-containing alkali aqueous solution contains an alkali hydroxide (MOH) and zinc ions ($Zn^{2+}$) at a mass ratio (MOH/ $Zn^{2+}$) of from 1 to 100. The M in MOH refers to an alkali metal or an alkali earth metal.

(3) Treatment with acid-based etchant

The metal member is treated with an acid-based etchant containing an acid and at least one of ferric ions or cupric ions. In this treatment, the zinc-containing film is dissolved, and a micron-scale concave-convex structure is formed on a surface of the metal member.

(4) After-treatment

The metal member is washed by performing water washing and drying, in general. The after-treatment may include ultrasonic washing for desmutting.

From the viewpoint of increasing the roughness index of the metal member, the roughening treatment may be performed more than twice. For example, the metal member may be subjected to a process for forming a micron-scale concave-convex structure (base roughened surface) by performing the processes (1) to (4), and subsequently a process for forming a nanoscale concave-convex structure (fine roughened surface).

Examples of the method for forming a fine roughened surface after forming a base roughened surface to the metal member include a method of contacting the metal member with an oxidizable acidic aqueous solution. The oxidizable acidic aqueous solution contains metallic cations having a standard electrode potential $E^0$ of greater than -0.2 and 0.8 or less, preferably greater than 0 and 0.5 or less.

The oxidizable acidic aqueous solution preferably does not contain metallic cations having a standard electrode potential $E^0$ of -0.2 or less.

Examples of the metallic cations having a standard electrode potential $E^0$ of greater than - 0.2 and 0.8 or less include $Pb^{2+}$, $Sn^{2+}$, $Ag^+$, $Hg^{2+}$ and $Cu^{2+}$. Among these, $Cu^{2+}$ is preferred in view of scarcity of the metal, and in view of safety or toxicity of a metal salt thereof.

Examples of the compound that generates $Cu^{2+}$ include inorganic compounds such as copper hydroxide, copper(II) oxide, copper(II) chloride, copper(II) bromide, copper sulfate and copper nitrate. From the viewpoint of safety, toxicity and efficiency of formation of a dendritic layer, copper oxide is preferred.

The oxidizable acidic aqueous solution includes nitric acid or a mixture of nitric acid with any one of hydrochloric acid, hydrofluoric acid or sulfuric acid. It is also possible to use a percarboxylic acid aqueous solution such as peracetic acid or performic acid.

When nitric acid is used as the oxidizable acidic aqueous solution and copper(II) oxide is used as the compound that generates metallic cations, the concentration of nitric acid in the aqueous solution may be, for example, from 10% by mass to 40% by mass, preferably from 15% by mass to 38% by mass, more preferably from 20% by mass to 35% by mass. The concentration of coper ions in the aqueous solutions may be, for example, from 1% by mass to 15% by mass, preferably from 2% by mass to 12% by mass, more preferably from 2% by mass to 8% by mass.

The temperature at which the metal member having a base roughened surface with an oxidizable acidic aqueous solution is not particularly limited. From the viewpoint of completing the roughening at a reasonable pace while suppressing an exothermic reaction, the temperature may be, for example, from ordinary temperature to 60°C, preferably from 30°C to 50°C. The time for the treatment may be, for example, from 1 minute to 15 minutes, preferably from 2 minutes to 10 minutes.

The state of the concave-convex structure formed at a surface of the metal member is not particularly limited as long as a desired degree of roughness index is satisfied.

The average diameter of the concave portions in the concave-convex structure may be, for example, from 5 nm to 250 $\mu$m, preferably from 10 nm to 150 $\mu$m, more preferably from 15 nm to 100 $\mu$m.

The average depth of the concave portions in the concave-convex structure may be, for example, from 5 nm to 250 $\mu$m, preferably from 10 nm to 150 $\mu$m, more preferably from 15 nm to 100 $\mu$m.

When at least one of the average diameter or the average depth of the concave portion in the concave-convex structure is within the above range, the metal member tends to be joined to the resin member more tightly.

The average diameter or the average depth of the concave portions in the concave-convex structure may be measured using an electron microscope or a laser microscope. Specifically, the average diameter and the average depth of the concave portions may be given as an arithmetic average value of the values measured at arbitrarily selected 50 concave portions that are shown in micrographs of a surface and a cross-section of a surface of the metal member.

The metal member preferably has a ratio of specific surface area represented by X/X', wherein X is a specific surface roughness (m$^2$/g) after performing a roughening treatment and X' is a specific surface roughness (m$^2$/g) before performing a roughening treatment, of 4.0 or more, more preferably 10.0 or more, further preferably 20.0 or more.

The size of the metal member is not particularly limited, and may be selected depending on the purpose of the member for electric conduction. For example, the metal member may have a sectional area (when the sectional area is not constant, the minimum value thereof) of from 1 mm$^2$ to 1,000 mm$^2$.

The cross-section shape of the metal member is not particularly limited, and the metal member may have a cross-section of rectangular shape, circular shape or the like. The metal member may have a flexional shape or a flectionless shape.

The metal member may have a plated layer. Examples of the effects or functions of the plated layer include impartation of electrical conductivity, weldability or anticorrosivity to the metal member. For example, a plated layer for imparting electrical conductivity has an effect of suppressing the occurrence of contact resistance, which is caused by formation of an insulating coating at a surface of the metal member. The material for the plated layer is not particularly limited, and may be selected from known materials such as tin (Sn), zinc (Zi), nickel (Ni) and chromium (Cr). The thickness of the plated layer is not particularly limited, and may be selected from a range of 10 nm to 2,000 $\mu$m, for example.

When the metal member has a plated layer, the metal member may have a plated layer at the entirety of a surface thereof, or may have at a portion of a surface thereof.

From the viewpoint of suppressing the contact resistance, the metal member preferably has a plated layer at at least a portion that is not in contact with the resin member.

From the viewpoint of securing the joining strength with respect to the resin member, the metal member preferably does not have a plated layer at a portion that is in contact with the resin member.

(Resin member)

The type of the resin included in the resin member is not particularly limited, and may be selected depending on the purpose of the member for electric conduction.

Examples of the resin include thermoplastic resins such as polyolefin resin, polyvinyl chloride, polyvinylidene chloride, polystyrene resin, AS resin, ABS resin, polyester resin, poly(meth)acrylic resin, polyvinyl alcohol, polycarbonate resin, polyamide resin, polyimide resin, polyether resin, polyacetal resin, fluorine resin, polysulfone resin, polyphenylene sulfide resin and polyketone resin;

thermosetting resins such as phenol resin, melamine resin, urea resin, polyurethane resin, epoxy resin and unsaturated polyester resin;
thermoplastic elastomers (TPE) such as olefin thermoplastic elastomer, styrene thermoplastic elastomer, polyester thermoplastic elastomer, urethane thermoplastic elastomer and amide thermoplastic elastomer; and
thermosetting elastomers such as rubbers.

The resin member may include a single kind of resin, or may include two or more kind thereof.

From the viewpoint of the joint strength with respect to the metal member, the resin included in the resin material is preferably selected from aromatic polyamide resin, semi-aromatic polyamide resin, polyphenylelne sulfide resin, polybutylene sulfide resin and polycyclohexylenedimethylene terephthalate resin.

From the viewpoint of satisfying both of joint strength and tracking resistance, the resin included in the resin member is preferably semi-aromatic polyamide resin.

The tracking resistance refers to a degree of resistance to tracking of an insulating material. The tracking resistance is evaluated by a tracking resistance test as specified by IEC 30112.

The tracking is a phenomenon of leading to insulation breakdown, which is caused by formation of carbonized electrically-conducting paths due to repetitive occurrence of micro discharge at a surface of an insulating material. The tracking may cause fire or electrical shock.

From the viewpoint of resistance to temperature changes, the resin member preferably include a resin having a linear expansion coefficient of 50 ppm/K or less.

In particular, when the metal member has a relatively small roughness index (for example, less than 10.0), it is possible to maintain a favorable degree of resistance to temperature changes by using a resin having a linear expansion coefficient of 50 ppm/K or less.

In the present disclosure, the linear expansion coefficient of the resin is measured by a method described in the Examples.

Examples of the polyamide resin include total-aliphatic polyamide resin, total-aromatic polyamide resin, and semi-aromatic polyamide resin. From the viewpoint of formability and joint strength with respect to the metal member, the polyamide resin is preferably semi-aromatic polyamide resin.

In the present disclosure, the total-aromatic polyamide resin is defined as a polyamide resin in which all structural units being joined to amide bonds are aromatic skeletons; the total-aliphatic polyamide resin is defined as a polyamide resin in which all structural units being joined to amide bonds are saturated hydrocarbon skeletons; and the semi-aromatic polyamide resin is defined as a polyamide resin that is not the total-aromatic polyamide resin or the total-aliphatic polyamide resin (i.e., a polyamide resin including both aromatic groups and aliphatic groups).

The polyamide resin may be a polyamide resin obtained by ring-opening polymerization of a cyclic lactam or condensation polymerization of an ω-amino carboxylic acid, or may be a polyamide resin obtained by condensation polymerization of a diamine and a dicarboxylic acid.

Examples of the total-aliphatic polyamide resin include polyamide 6, polyamide 11, polyamide 12 and polyamide 66.

Examples of the semi-aromatic polyamide resin include polyhexamethylene terephthalamide (polyamide 6T), polyhexamethylene isophthalamide (polyamide 6I), polyhexamethylene adipamide / polyhexamethyelne terephthalamide copolymer (polyamide 66/6T), polyhexamethylene terephthalamide / polycaproamide copolymer (polyamide 6T/6), polyhexamethylene adipamide / polyhexamethylene isophthalamide copolymer (polyamide 66/6I), polyhexamethylene isophthalamide / polycaproamide copolymer (polyamide 6I/6), polydodecamide / polyhexamethylene terephthalmaide copolymer (polyamide 12/6T), polyhexamethylene adipamide / polyhexaxmethylene terephthalmaide / polyhexamethyelene isophthalamide copolymer (polyamide 66/6T/6I), polyhexamethyelene adipamide / polycaproamide / polyhexamethyelene isophthalamide copolymer (polyamide 66/6/6I), polyhexamethyelene isophthalamide / polyhexamethyelene terephthalmaide copolymer (polyamide 6I/6T), polyhexamethylene terephthalamide / poly(2-methylpentamethylene terephthalamide) copolymer (polyamide 6T/M5T), polyhexamethyelene adipamide / polyhexamethylene terephthalamide / poly(2-methylpentamethylene terephthalamide) copolymer (polyamide 66/6T/M5T), polyhexamethyelene terephthalamide / poly(2-methylpentamethylene terephthalamide) copolymer / polyhexamethylene isophthalamide copolymer (polyamide 6T/M5T/6I), polynonanemethylene terephthalamide (polyamide 9T), polynonanemethylene terephthalamide / polyoctanemethyelene terephthalamide copolymer (polyamide 9T/8T), poly(2-methylpentamethylene terephthalamide) / poly(2-methylpentamethylene isophthalamide) copolymer (polyamide M5T/M5I) and poly m-xylylene adipamide (polyamide MXD6).

In the parentheses, the number refers to a carbon number, T refers to a terephthalic acid unit, and I refers to an isophthalic acid unit.

The polyamide resin may be used singly, or may be used as a mixture or a copolymer of two or more kinds.

Specific examples of the aromatic group in the polyamide resin include a divalent group derived from an aromatic dicarboxylic acid, such as benzene dicarboxylic acid (such as terephthalic acid and isophthalic acid), naphthalene dicarboxylic acid and biphenyl dicarboxylic acid; and a divalent group derived from an aromatic diamine such as diaminobenzene, diaminonaphthalene and diaminobiphenyl.

The carbon number of the aromatic dicarboxylic acid or the aromatic diamine (except for the carbon number of a carboxy group or a substituent) may be from 6 to 20, for example, preferably from 6 to 10.

Specific examples of the aliphatic group in the polyamide resin obtained by ring-opening polymerization of a cyclic lactam or condensation polymerization of an ω-amino carboxylic acid include a divalent group derived from an aliphatic lactam having a carbon number of from 5 to 20 such as lauryllactam, ε-caprolactam, udecanelactam, ω-enantholactam and 2-pyrrolidone, and a divalent group derived from an ω-aminocarboxylic acid such as 6-amino caproic acid, 7-aminoheptanoic acid, 8-aminooctanoic acid, 10-aminocaproic acid, 11-aminoundecanoic acid and 12-aminododecanoic acid.

The carbon number (except for the carbon number of a carboxy group) of the cyclic lactam or the ω-amino carboxylic acid may be from 3 to 20, for example, preferably from 3 to 10.

Specific examples of the aliphatic group in the polyamide resin obtained by condensation polymerization of a diamine and a dicarboxylic acid include a divalent group derived from an aliphatic dicarboxylic acid such as glutaric acid, adipic acid, pimelic acid, suberic acid, azelaic acid, sebacic acid, dodecanedioic acid, tetradecanedioic acid, hexadecanedioic acid, octadecanedioic acid and eicosanedioic acid; and a divalent group derived from an aliphatic diamine such as pentamethylenediamine, hexamethylenediamine, heptamethylenediamine, octamethylenediamine, nonamethylenediamine, decamethylenediamine and dodecamethylenediamine.

The carbon number (except for the carbon number of a carboxy group) of the aliphatic dicarboxylic acid or the aliphatic diamine may be from 3 to 20, for example, preferably from 3 to 10.

In the present embodiment, the polyamide resin may be obtained by condensation polymerization of an aromatic dicarboxylic acid and an aliphatic diamine or by condensation polymerization of an aromatic diamine and an aliphatic dicarboxylic acid. The polyamide resin is preferably obtained by condensation polymerization of an aromatic dicarboxylic acid and an aliphatic diamine.

The aromatic group or the aliphatic group in the polyamide resin may have a substituent or may not. Examples of the substituent include an alkyl group having 1 to 6 carbon atoms, an aryl group having 6 to 12 carbon atoms, an arylalkyl group having 7 to 20 carbon atoms, a halogen atom such as a chlorine group or a bromine group, an alkylsilyl group having 3 to 10 carbon atoms, and a sulfonic acid group.

The polyamide resin preferably includes two or more kinds of aromatic groups or two or more kinds of aliphatic groups. Such polyamide resins have a complicated and sterically-hindered molecular structure, thereby suppressing crystallization and decreasing a rate of crystallization. As a result, the resin exhibits suppressed fluidity and becomes easier to enter a concave-convex structure at a surface of the metal member, and the joining strength is supposed to improve.

The polyamide resin may include at least one of an m-phenylene group or a branched aliphatic group. When the polyamide resin includes at least one of an m-phenylene group or a branched aliphatic group, the polyamide resin has a structure with an increased degree of steric hindrance due to a low degree of linearity or rigidity, thereby having a suppressed rate of crystallization. As a result, the resin exhibits suppressed fluidity and becomes easier to enter a concave-convex structure at a surface of the metal member, and the joining strength is supposed to improve.

Examples of the m-phenylene group in the polyamide resin include an aromatic group derived from isophthalic acid or an aromatic group derived from 1,3-diaminoibenzene.

Examples of the branched aliphatic group in the polyamide resin include an alkylene group having at least one alkyl group that replaces any hydrogen atom of the alkylene group (hereinafter, also referred to as a side-chain alkylene group). The side-chain alkylene group is preferably a side-chain alkylene group with a total carbon number of from 4 to 20, more preferably a side-chain alkylene group with a total carbon number of from 4 to 12. The alkyl group in the side-chain alkylene group is preferably an alkyl group having a carbon number of from 1 to 3, more preferably a methyl group.

Specific examples of the branched aliphatic group include 2-methylpentamethylene group, 2,2,4-trimethylhexamethylene group, 2,4,4-trimethylhexamethylene group, 2-methyloctamethylene group and a 2,4-dimethyloctamethylene group.

From the viewpoint of heat resistance and oil resistance, the polyamide resin preferably includes a p-phenylene group as an aromatic group. Examples of the p-phenylene group include an aromatic group derived from terephthalic acid and an aromatic group derived from 1,4-diaminobenzene. For example, the content of a p-phenylene group is preferably from 40 mol% to 100 mol%, more preferably from 45 mol% to 90 mol%, further preferably from 55 mol% to 80 mol%, with respect to a total of 100 mol% of the aromatic groups included in the polyamide resin.

From the viewpoint of joint strength with respect to a metal member, the content of the aromatic group other than the p-phenylene group (preferably a m-phenylene group) is preferably from 0 mol% to 60 mol%, more preferably from 10 mol% to 55 mol%, further preferably from 20 mol% to 45 mol%, with respect to a total of 100 mol% of the aromatic groups included in the polyamide resin.

From the viewpoint of joint strength with respect to a metal member, the content of the branched aliphatic group (preferably a side-chain alkylene group having 4 to 20 carbon atoms) is preferably from 0 mol% to 60 mol%, more preferably from 10 mol% to 60 mol%, further preferably from 15 mol% to 55 mol%, with respect to a total of 100 mol% of the aliphatic groups included in the polyamide resin.

As a side-chain alkylene group having 4 to 20 carbon atoms, a side-chain alkylene group derived from at least one of 2-methyl-1,8-octanediamine or 2-methyl-1,5-penetadiamine is preferred.

The polyamide resin preferably has a glass transition temperature (Tg) measured by differential scanning calorimetry (DSC) of from 80°C to 140°C. When the polyamide resin has a Tg within the above range, it is possible to achieve tight joining to a metal member and a sufficient degree of heat resistance.

The Tg of the polyamide resin is measured by a method including a process of increasing the temperature from 30°C to 350°C at a rate of 10°C/min (first temperature rising), a process of decreasing the temperature from 350°C to 0°C at a rate of 10°C/min (temperature decreasing) and a process of increasing the temperature from 0°C to 350°C at a rate of 10°C/min (second temperature rising). The Tg is determined as a temperature corresponding to a flexion point observed during the second temperature rising.

The polyamide resin preferably has a crystallization temperature (Tc) measured by differential scanning calorimetry (DSC) of from 250°C to 300°C. When the polyamide resin has a Tc within the above range, it is possible to achieve tight joining to a metal member and a sufficient degree of heat resistance.

The Tc of the polyamide resin is measured by a method including a process of increasing the temperature from 30°C to 350°C at a rate of 10°C/min (first temperature rising) and a process of decreasing the temperature from 350°C to 0°C at a rate of 10°C/min (first temperature decreasing). The Tc is determined as a temperature corresponding to a peak detected during the first temperature decreasing. When two or more peaks are detected, the temperature corresponding to a peak at the highest temperature is determined as the Tc of the polyamide resin.

From the viewpoint of followability with respect to a metal member, the resin member may have elasticity. For example, the resin member may include an elastomer. When the resin member includes an elastomer, for example, it is possible to maintain favorable joint strength even if a metal member is subjected to a bending process while having a resin member joined to a surface of the metal member.

From the viewpoint of the followability to a metal member, the resin member preferably has a bending elastic modulus at 23°C of 1000 MPa or less measured by a method as specified in JIS K 7203(1982), more preferably 800 MPa or less, further preferably 600 MPa or less. From the viewpoint of securing a sufficient degree of strength, the resin member preferably has a bending elastic modulus at 23°C of 1 MPa or more.

Examples of the elastomer include thermoplastic elastomers (TPE) such as olefin thermoplastic elastomer, styrene thermoplastic elastomer, polyester thermoplastic elastomer, urethane thermoplastic elastomer and amide thermoplastic elastomer, and rubbers. From the viewpoint of formability, thermoplastic elastomers (TPE) are preferred.

In the present disclosure, the TPE refers to an elastic material that does not require vulcanization like rubbers. The TPE generally refers to a material formed of a hard component (had and rigid component) and a soft component (soft and flexible component).

From the viewpoint of adhesion, sealing properties, acid resistance and airtightness at a joining interface, the resin member preferably includes at least one of urethane TPE (TPU) or amino TPE (TPAE), more preferably includes both of TPU and TPAE.

When the resin member includes TPU and TPAE, the total content of the TPU and TPAE in the resin member may be any one of from 60% by mass to 100% by mass, from 65% by mass to 95% by mass, or from 70% by mass to 95% by mass, for example.

For example, the TPU is a multi-block polymer formed from a hard segment, which is formed from a diisocyanate and a short-chain glycol (chain-extension agent), and a soft segment, which is formed mainly from a polymer glycol having a number average molecular weight of from 1000 to 4000. Examples of the diisocyanate include aromatic diisocyanates such as 4,4'-diphenylmethane diisocyanate (MDI). In a case in which weather resistance is required, aliphatic isocyanates such as hexamethylene diisocyanate (HDI) may be used. Examples of the short-chain glycol include ethylene glycol, 1,3-propanediol, 1,4-butanediol, 1,5-pentanediol, 1,6-hexanediol, diethylene glycol, tetraethylene glycol, neopenthyl glycol, 1,4-cyclohexane dimethanol, 1,4-bis(hydroxyethyl) hydroquinone, and a mixture thereof. Examples of the polymer glycol include polyether polyols such as polytetramethylene ether glycol (PTMEG), polyester polyols such as a condensed product of adipic acid and an aliphatic or aromatic glycol, and polycaprolactone polyols obtained by ring-opening polymerization of ε-caprolactone.

The TPUs are classified according to the type of the components used as the diisocyanates, short-chain glycols or polymer glycols, and there are ether-type TPUs, adipate ester-type TPUs, caprolactone-TPUs, carbonate-type TPUs and the like. The resin member may include any of these TPUs.

In a case in which the member for electric conduction is exposed to an acidic atmosphere, the resin member preferably includes an ether-type TPU or an ester-type TPU, preferably an ether-type TPU.

Examples of the commercial products of TPU include RESAMINE P™ from Dainichiseika Ltd., PANDEX™ from DIC Covestro Polymer Ltd., MIRACTRAN™ from Tosoh Corporation, PELLETHANE™ from the Dow Chemical Company, ESTANE™ from BF Goodrich, and DESMOPAN™ from Bayer AG.

TPAE refers to a thermoplastic resin material, which is a copolymer being formed from a polymer that forms a hard segment, which is crystalline and has a high melting point, and a polymer that forms a soft segment, which is amorphous and has a low melting point, and having an amide bond (-CONH-) in the main chain of a polymer that forms a hard segment. Examples of the TPAE include amide thermoplastic elastomers as specified in JIS K 6418:2007, and polyamide elastomers as described in JP-A 2004-346273.

Examples of TPAE include a material in which at least a polyamide forms a hard segment that is crystalline and has a high melting point, and a polymer other than polyamide (such as polyester or polyether) forms a soft segment that is amorphous and has a low Tg. It is possible to use a chain extender such as dicarboxylic acids. Examples of the polyamide that forms a hard segment include polyamides obtained from $\omega$-aminocarboxylic acids or lactams.

Examples of the $\omega$-aminocarboxylic acid include aliphatic $\omega$-aminocarboxylic acids having 5 to 20 carbon atoms, such as 6-aminocaproic acid, 7-aminoheptanoic acid, 8-aminooctanoic acid, 10-aminocapric acid, 11-undecanoic acid and 12-aminododecanoic acid.

Examples of the lactam include aliphatic lactams having 5 to 20 carbon atoms, such as lauryllactam, $\varepsilon$-caprolactam, undecalactam, $\omega$-enantholactam and 2-pyrrolidone.

Preferred examples of the polyamide for forming a hard segment include a polyamide obtained by ring-opening polymerization of lauryllactam, $\varepsilon$-caprolactam or undecalactam.

Examples of the polymer that forms a soft segment include a polyester and a polyether. Examples of the polyether include polyethylene glycol, polypropylene glycol, polytetramethylene ether glycol and ABA-type triblock polyether. These polymers may be used singly or in combination of two or more kinds.

It is also possible to use polyetherdiamines, which are obtained by causing reaction of ammonia or the like to a molecular end of polyether.

The combination of the hard segment and the soft segment include any combination of the hard segment and the soft segment as described above.

Among these, the combination is preferably a combination of ring-opened polymer of lauryllactam / polyethylene glycol, a combination of ring-opened polymer of lauryllactam / polypropylene glycol, a combination of ring-opened polymer of lauryllactam / polytetramethylene ether glycol or a combination of ring-opened polymer of lauryllactam / ABA-type triblock polyether; more preferably a combination of ring-opened polymer of lauryllactam / ABA-type triblock polyether.

From the viewpoint of moldability, the number average molecular weight of a polymer that forms a hard segment (polyamide) is preferably from 300 to 15000. From the viewpoint of toughness and flexibility at low temperatures, the number average molecular weight of a polymer that forms a soft segment is preferably from 200 to 6000. From the viewpoint of moldability, the mass ratio of the hard segment (x) to the soft segment (y) (x:y) is preferably from 50:50 to 90:10, more preferably 50:50 to 80:20.

The TPAE may be synthesized by copolymerizing a polymer for forming a hard segment and a polymer for forming a soft segment by a known process.

Commercial products of TPAE include the PEBAX33 series (for example, 7233, 7033, 6333, 5533, 4033, MX1205, 3533, 2533) from Arkema S.A., the UBEATA XPA series (for example, XPA9063X1, XPA9055X1, XPA9048X2, XPA9048X1, XPA9040X1 and XPA9040X2) from UBE Corporation, and the VEATAMID series (for example, E40-S3, E47-S1, E47-S3, E55-S3, EX9200 and E50-R2) from Daicel-Evonik Corporation Ltd.)

From the viewpoint of joint strength with respect to a metal member, and from the viewpoint of relaxing a stress due to a difference between the linear expansion coefficients of the metal member and the resin member, the resin member preferably includes an acid-modified polymer.

As the acid-modified polymer, an acid-modified polyolefin resin, having a structure derived from an olefin component and an unsaturated carboxylic acid component, is preferably used.

As the olefin component, $\alpha$-olefins such as ethylene, propylene, 1-butene, 1-pentene, 1-hexene, 4-methyl-1-pentene, 1-heptene, 1-octene, 1-nonene, 1-decene, 1-undecene and 1-dodecene are preferred, and a mixture of thereof may be used.

From the viewpoint of adhesion and water resistance, ethylene, propylene and 1-butene are preferred.

Examples of the unsaturated carboxylic acid include acrylic acid, methacrylic acid, maleic acid (anhydride), itaconic acid (anhydride), aconitic acid (anhydride), fumaric acid, crotonic acid, citraconic acid, mesaconic acid and allylsuccnic acid.

It is possible to use a compound having at least one carboxy group or an anhydride group in the molecule, such as a half-ester or a half-amide of an unsaturated dicarboxylic acid, as the unsaturated carboxylic acid.

From the viewpoint of ease of introduction into polyolefin, maleic acid anhydride is preferred.

In the present disclosure, the acid (anhydride) refers to an acid or an acid anhydride. For example, the maleic acid (anhydride) refers to maleic acid or maleic acid anhydride.

The manner of copolymerization of an unsaturated carboxylic acid and an olefin component is nor particularly limited, and may be random copolymerization, block copolymerization, graft copolymerization or the like. From the viewpoint of ease of polymerization, graft copolymerization is preferred.

Specific examples of the acid-modified polyolefin include ethylene/(meth)acrylic acid copolymers; ethylene/$\alpha$-olefin/maleic acid (anhydride) copolymers such as ethylene/propylene/maleic acid (anhydride) copolymer, ethylene/1-butene/maleic acid (anhydride) copolymer, ethylene/propylene/1-butene/maleic acid (anhydride) copolymer; propylene/$\alpha$-olefin/maleic acid (anhydride) copolymers such as propylene/1-butene/maleic acid (anhydride) copolymer and propylene/octene/maleic acid (anhydride) copolymer; ethylene/(meth)acrylic acid ester/maleic acid(anhydride) copolymer; ethylene/maleic acid (anhydride) copolymer: and propylene/maleic acid (anhydride) copolymer. These copolymers may be used singly or in combination of two or more kinds.

The acid-modified polyolefin may include a structural unit other than the above.

Examples of the other structural units include (meth)acrylic acid esters such as methyl(meth)acrylate, ethyl(meth)acrylate and butyl (meth)acrylate; maleic acid esters such as dimethyl maleate, diethyl maleate and dibutyl maleate; (meth)acrylic acid amides: alkyl vinyl ethers such as methyl vinyl ether and ethyl vinyl ether; vinyl esters such as vinyl formate, vinyl acetate, vinyl propionate, vinyl pivalate and vinyl versatate; vinyl alcohols obtained by saponifying a vinyl ester with a basic compound; 2-hydroxyetheyl acrylate; glycidyl (meth)acrylate; (meth)acrylonitrile; styrene; substituted styrene; halogenated vinyl compounds: halogenated vinylidene compounds; carbon monoxide; and sulfur dioxide.

These structural units may be a combination of two or more kinds.

The content of the other structural units is preferably 10% by mass or less when a total of the acid-modified polyolefin is taken as 100% by mass.

It is possible to use a (meth)acrylic block copolymer represented by the following Formula (1), which is obtained by living anion polymerization.

Formula (1): -[a]-[b]-[a]-

In Formula (1), [a] represents a methyl methacrylate polymer block and [b] represents an alkyl (meth)acrylate polymer block, wherein the carbon number of the alkyl group is from 0 to 12.

In the present disclosure, "(meth)acryl" refers to acryl or methacryl, and "(meth)acrylate" refers to acrylate or methacrylate.

Commercial products of the acid-modified polymer include the NUCREL™ series, which are acid-modified polyolefins from Dow-Mitsui Polychemicals, the HIMILAN™ series, which are ionomers of the acid-modified polyolefins from Dow-Mitsui Polychemicals, the KURARITY™ series, which are acrylic block copolymer from Kuraray Co., Ltd., the MODIC™ series, which are acid-modified polyolefins from Mitsubishi Chemical Corporation, the ADMER™ series, which are acid-modified polypropylene from Mitsui Chemicals, Inc., the TAFMER™ series, which are acid-modified α-olefin copolymer resins from Mitsui Chemicals, Inc., the REXPAR™ series, which are acid-modified polyethylene from Japan Polyethylene Corporation, and the BONDINE™ series, which are maleic acid anhydride-modified polyolefin from Alkema S.A.

The resin member may include additives of various kinds in addition to the resin.

Examples of the additive include a filler such as glass fiber, carbon fiber and inorganic powder, a thermal stabilizer, an antioxidant, a pigment, a weathering agent, a fire retardant, a plasticizer, a dispersant, a lubricant, a releasing agent and an antistat.

When the resin member includes a component other than the resin, the content of the resin in the total resin member is preferably 10% by mass or more, more preferably 20% by mass or more, further preferably 30% by mass or more.

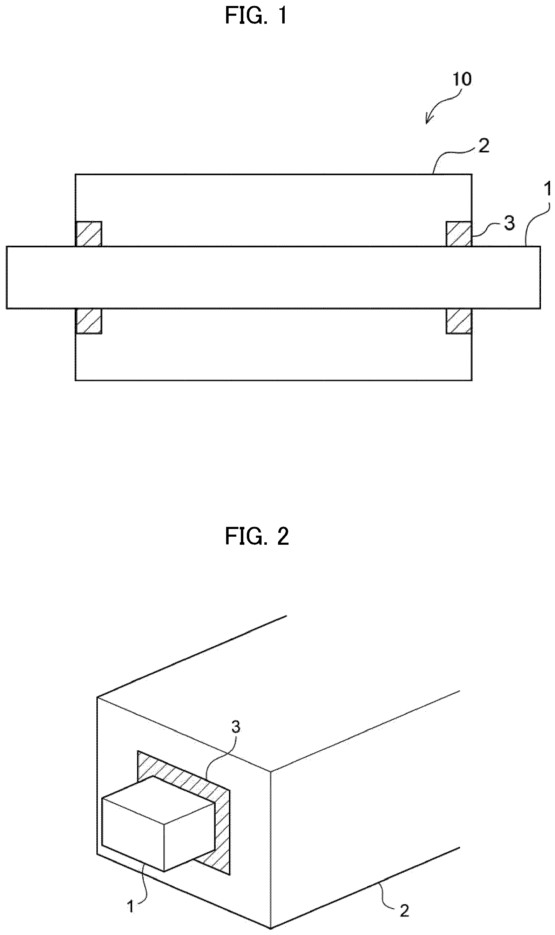

The resin member that is joined to a surface of the metal member may be a single component or a combination of two or more components. For example, as shown in Fig. 1 and

Fig. 2, the resin member may be a combination of resin member 2, which is disposed around the main body of metal member 1, and resin member 3, which is disposed so as to cover the border between metal member 1 and resin member 3.

By disposing resin member 3 that covers the border between metal member 1 and resin member 2, it is possible to enhance the airtightness between metal member 1 and resin member 2, thereby improving reliability of the member for electric conduction.

When the resin member is a combination of two or more components, the resin used for each component may be the same or different. From the viewpoint of increasing the sealing properties of resin member 3, resin member 3 preferably has a lower elastic modulus than that of resin member 2. For example, it is possible to use a resin having excellent joint strength and optionally excellent tracking resistance for resin member 2, and an elastomer for resin member 3.

The state of the resin member being joined to a surface of the metal member may be produced by, for example, applying a resin having fluidity by melting or the like to a surface of a metal member. When the resin has fluidity upon application, the resin enters a concave-convex structure at a surface of the metal member and exhibits an anchoring effect. As a result, the resin member is tightly joined to a surface of the metal member.

The resin having fluidity may be formed into a desired shape using a mold or the like. The method for molding is not particularly limited, and may be performed by a known method such as injection molding.

<Member for electric conduction (second embodiment)>

The member for electric conduction according to the second embodiment of the present disclosure is a member for electric conduction, comprising a metal member and a resin member that is joined to at least a part of a surface of the metal member, the resin member comprising a polyamide resin having an aromatic group and an aliphatic group.

In the member for electric conduction, the resin member includes a polyamide resin having an aromatic group and an aliphatic group (hereinafter, also referred to as a semi-aromatic polyamide resin).

In the present disclosure, the total-aromatic polyamide resin is defined as a polyamide resin in which all structural units being joined to amide bonds are aromatic skeletons; the total-aliphatic polyamide resin is defined as a polyamide resin in which all structural units being joined to amide bonds are saturated hydrocarbon skeletons; and the semi-aromatic polyamide resin is defined as a polyamide resin that is not the total-aromatic polyamide resin or the total-aliphatic polyamide resin (i.e., a polyamide resin including both aromatic groups and aliphatic groups).

The member for electric conduction exhibits excellent joint strength with respect to a metal member by including a polyamide resin having an aromatic group in the resin member, and exhibits excellent tracking resistance by including a polyamide resin having an aliphatic group in the resin member.

The tracking resistance refers to a degree of resistance to tracking of an insulating material. The tracking resistance is evaluated by a tracking resistance test as specified by IEC 30112.

The tracking is a phenomenon of leading to insulation breakdown, which is caused by formation of carbonized electrically-conducting paths due to repetitive occurrence of micro discharge at a surface of an insulating material. The tracking may cause fire or electrical shock.

When the result of the test as specified in IEC 60112 is 200 V or more, for example, the member for electric conduction may be regarded as having a desirable tracking resistance.

The member for electric conduction may have a tracking resistance of the resin member as measured by a test as specified in IEC of 200 V or more, 400 V or more, or 600 V or more.

The member for electric conduction exhibits excellent joint strength. For example, the member for electric conduction may have a shear strength measured by a method as specified in ISO 19095 of 20 MPa or more, 30 MPa or more, or 40 MPa or more.

(Resin member)

The resin member is not particularly limited as long as it includes a polyamide resin having an aromatic group and an aliphatic group.

From the viewpoint of heat resistance and oil resistance, the polyamide resin preferably includes a p-phenylene group as an aromatic group. From the viewpoint of tracking resistance, the polyamide resin preferably includes an aliphatic group of 4 to 20 carbon atoms as the aliphatic group.

Examples of the p-phenylene group include an aromatic group derived from terephthalic acid and an aromatic group derived from 1,4-diaminobenzene.

Examples of the aliphatic group having 4 to 20 carbon atoms includes an aliphatic group derived from an aliphatic diamine having 4 to 20 carbon atoms or a dicarboxylic acid having 4 to 20 carbon atoms.

Specific examples of the aromatic group in the polyamide resin include a divalent group derived from an aromatic dicarboxylic acid, such as benzene dicarboxylic acid (such as terephthalic acid and isophthalic acid), naphthalene dicarboxylic acid and biphenyl dicarboxylic acid; and a divalent group derived from an aromatic diamine such as diaminobenzene, diaminonaphthalene and diaminobiphenyl.

The carbon number of the aromatic dicarboxylic acid or the aromatic diamine (except for the carbon number of a carboxy group or a substituent) may be from 6 to 20, for example, preferably from 6 to 10.

Specific examples of the aliphatic group in the polyamide resin include a divalent group derived from an aliphatic dicarboxylic acid such as glutaric acid, adipic acid, pimelic acid, suberic acid, azelaic acid, sebacic acid, dodecanedioic acid, tetradecanedioic acid, hexadecanedioic acid, octadecanedioic acid and eicosanedioic acid; and a divalent group derived from an aliphatic diamine such as pentamethylenediamine, hexamethylenediamine, heptamethylenediamine, octamethylenediamine, nonamethylenediamine, decamethylenediamine and dodecamethylenediamine.

The carbon number (except for the carbon number of a carboxy group) of the aliphatic dicarboxylic acid or the aliphatic diamine may be from 3 to 20, for example, preferably from 3 to 10.

In the present embodiment, the polyamide resin may be obtained by condensation polymerization of an aromatic dicarboxylic acid and an aliphatic diamine or by condensation polymerization of an aromatic diamine and an aliphatic dicarboxylic acid. The polyamide resin is preferably obtained by condensation polymerization of an aromatic dicarboxylic acid and an aliphatic diamine.

The aromatic group or the aliphatic group in the polyamide resin may have a substituent or may not. Examples of the substituent include an alkyl group having 1 to 6 carbon atoms, an aryl group having 6 to 12 carbon atoms, an arylalkyl group having 7 to 20 carbon atoms, a halogen atom such as a chlorine group or a bromine group, an alkylsilyl group having 3 to 10 carbon atoms, and a sulfonic acid group.

The polyamide resin preferably includes two or more kinds of aromatic groups or two or more kinds of aliphatic groups. Such polyamide resins have a complicated and sterically-hindered molecular structure, thereby suppressing crystallization and decreasing a rate of crystallization. As a result, the resin exhibits suppressed fluidity and becomes easier to enter a concave-convex structure at a surface of the metal member, and the joining strength is supposed to improve.

The polyamide resin may include at least one of an m-phenylene group or a branched aliphatic group. When the polyamide resin includes at least one of an m-phenylene group or a branched aliphatic group, the polyamide resin has a structure with an increased degree of steric hindrance due to a low degree of linearity or rigidity, thereby having a suppressed rate of crystallization. As a result, the resin exhibits suppressed fluidity and becomes easier to enter a concave-convex structure at a surface of the metal member, and the joining strength is supposed to improve.

Examples of the m-phenylene group in the polyamide resin include an aromatic group derived from isophthalic acid or an aromatic group derived from 1,3-diaminoibenzene.

Examples of the branched aliphatic group in the polyamide resin include an alkylene group having at least one alkyl group that replaces any hydrogen atom of the alkylene group (hereinafter, also referred to as a side-chain alkylene group). The side-chain alkylene group is preferably a side-chain alkylene group with a total carbon number of from 4 to 20, more preferably a side-chain alkylene group with a total carbon number of from 4 to 12. The alkyl group in the side-chain alkylene group is preferably an alkyl group having a carbon number of from 1 to 3, more preferably a methyl group.

Specific examples of the branched aliphatic group include 2-methylpentamethylene group, 2,2,4-trimethylhexamethylene group, 2,4,4-trimethylhexamethylene group, 2-methyloctamethylene group and a 2,4-dimethyloctamethylene group.

From the viewpoint of heat resistance and oil resistance, the content of a p-phenylene group is preferably from 40 mol% to 100 mol%, more preferably from 45 mol% to 90 mol%, further preferably from 55 mol% to 80 mol%, with respect to a total of 100 mol% of the aromatic groups included in the polyamide resin.

From the viewpoint of joint strength with respect to a metal member, the content of the aromatic group other than the p-phenylene group (preferably a m-phenylene group) is preferably from 0 mol% to 60 mol%, more preferably from 10 mol% to 55 mol%, further preferably from 20 mol% to 45 mol%, with respect to a total of 100 mol% of the aromatic groups included in the polyamide resin.

From the viewpoint of joint strength with respect to a metal member, the content of the branched aliphatic group (preferably a side-chain alkylene group having 4 to 20 carbon atoms) is preferably from 0 mol% to 60 mol%, more preferably from 10 mol% to 60 mol%, further preferably from 15 mol% to 55 mol%, with respect to a total of 100 mol% of the aliphatic groups included in the polyamide resin.

As a side-chain alkylene group having 4 to 20 carbon atoms, a side-chain alkylene group derived from at least one of 2-methyl-1,8-octanediamine or 2-methyl-1,5-penetadiamine is preferred.

Examples of the aromatic polyamide resin having an aromatic group and an aliphatic group include polyhexamethylene terephthalamide (polyamide 6T), polyhexamethylene isophthalamide (polyamide 6I), polyhexamethylene adipamide / polyhexamethyelne terephthalamide copolymer (polyamide 66/6T), polyhexamethylene terephthalamide / polycaproamide copolymer (polyamide 6T/6), polyhexamethylene adipamide / polyhexamethylene isophthalamide copolymer (polyamide 66/6I), polyhexamethylene isophthalamide / polycaproamide copolymer (polyamide 6I/6), polydodecamide / polyhexamethylene terephthalmaide copolymer (polyamide 12/6T), polyhexamethylene adipamide / polyhexaxmethylene terephthalmaide / polyhexamethyelene isophthalamide copolymer (polyamide 66/6T/6I), polyhexamethyelene adipamide / polycaproamide / polyhexamethyelene isophthalamide copolymer (polyamide 66/6/6I), polyhexamethyelene isophthalamide / polyhexamethyelene terephthalmaide copolymer (polyamide 6I/6T), polyhexamethylene terephthalamide / poly(2-methylpentamethylene terephthalamide) copolymer (polyamide 6T/M5T), polyhexamethyelene adipamide / polyhexamethylene terephthalamide / poly(2-methylpentamethylene terephthalamide) copolymer (polyamide 66/6T/M5T), polyhexamethyelene terephthalamide / poly(2-methylpentamethylene terephthalamide) copolymer / polyhexamethylene isophthalamide copolymer (polyamide 6T/M5T/6I), polynonanemethylene terephthalamide (polyamide 9T), polynonanemethylene terephthalamide / polyoctanemethyelene terephthalamide copolymer (polyamide 9T/8T), poly(2-methylpentamethylene terephthalamide) / poly(2-methylpentamethylene isophthalamide) copolymer (polyamide M5T/M5I) and poly m-xylylene adipamide (polyamide MXD6).

In the parentheses, the number refers to a carbon number, T refers to a terephthalic acid unit, and I refers to an isophthalic acid unit.

The polyamide resin may be used singly, or may be used as a mixture or a copolymer of two or more kinds.

The polyamide resin preferably has a glass transition temperature (Tg) measured by differential scanning calorimetry (DSC) of from 80°C to 140°C. When the polyamide resin has a Tg within the above range, it is possible to achieve tight joining to a metal member and a sufficient degree of heat resistance.

The Tg of the polyamide resin is measured by a method including a process of increasing the temperature from 30°C to 350°C at a rate of 10°C/min (first temperature rising), a process of decreasing the temperature from 350°C to 0°C at a rate of 10°C/min (temperature decreasing) and a process of increasing the temperature from 0°C to 350°C at a rate of 10°C/min (second temperature rising). The Tg is determined as a temperature corresponding to a flexion point observed during the second temperature rising.

The polyamide resin preferably has a crystallization temperature (Tc) measured by differential scanning calorimetry (DSC) of from 250°C to 300°C. When the polyamide resin has a Tc within the above range, it is possible to achieve tight joining to a metal member and a sufficient degree of heat resistance.

The Tc of the polyamide resin is measured by a method including a process of increasing the temperature from 30°C to 350°C at a rate of 10°C/min (first temperature rising) and a process of decreasing the temperature from 350°C to 0°C at a rate of 10°C/min (first temperature decreasing). The Tc is determined as a temperature corresponding to a peak detected during the first temperature decreasing. When two or more peaks are detected, the temperature corresponding to a peak at the highest temperature is determined as the Tc of the polyamide resin.

The resin member may include additives of various kinds in addition to the resin.

Examples of the additive include a filler such as glass fiber, carbon fiber and inorganic powder, a thermal stabilizer, an antioxidant, a pigment, a weathering agent, a fire retardant, a plasticizer, a dispersant, a lubricant, a releasing agent and an antistat.

When the resin member includes a component other than the resin, the content of the resin in the total resin member is preferably 10% by mass or more, more preferably 20% by mass or more, further preferably 30% by mass or more.

(Metal member)

The metal member in the member for electric conduction is not particularly limited as long as it has electrical conductivity, and may be selected from commonly used materials. For example, the metal member may be the exemplary metal members in the member for electric conduction of the first embodiment.

The metal member may satisfy the conditions for the metal member in the member for electric conduction of the first embodiment, or may not satisfy the conditions for the metal member in the member for electric conduction of the first embodiment.

The resin member that is joined to a surface of the metal member may be a single component or a combination of two or more components. For example, as shown in Fig. 1 and Fig. 2, the resin member may be a combination of resin member 2, which is disposed around the main body of metal member 1, and resin member 3, which is disposed so as to cover the border between metal member 1 and resin member 3.

By disposing resin member 3 that covers the border between metal member 1 and resin member 2, it is possible to enhance the airtightness between metal member 1 and resin member 2, thereby improving reliability of the member for electric conduction.

When the resin member is a combination of two or more components, the resin used for each component may be the same or different. From the viewpoint of increasing the sealing properties of resin member 3, resin member 3 preferably has a lower elastic modulus than that of resin member 2. For example, it is possible to use the polyamide resin as described above and an elastomer may be used for resin member 2 and resin member 3, respectively.

Examples of the elastomer include thermoplastic elastomers (TPE) such as olefin thermoplastic elastomers, styrene thermoplastic elastomers, polyester thermoplastic elastomers, urethane thermoplastic elastomers and amide thermoplastic elastomers; and rubbers.

From the viewpoint of moldability, thermoplastic elastomers (TPE) are preferred. From the viewpoint of compatibility with an polyamide resin, urethane thermoplastic elastomers and amide thermoplastic elastomers are preferred.

<Application of member for electric conduction>

The member for electric conduction according to the present disclosure may be used for various applications, such as bus bars, terminals and connectors.

Specifically, the member for electric conduction according to the present disclosure may be used for electric conversion device such as inverts and converters, motors, integrated drive modules such as e-Axles, secondary battery modules including secondary batteries, and secondary battery packages.

<Method for manufacturing member for electric conduction A>

The method for manufacturing a member for electric conduction A according to the present disclosure is a method for manufacturing a member for electric conduction, the method comprising:

performing a roughening treatment on at least a part of a surface of a metal member; and
forming a resin member at at least a part of the surface of the metal member that has been subjected to the roughening treatment.

<Method for manufacturing member for electric conduction B>

The method for manufacturing a member for electric conduction B according to the present disclosure is a method for manufacturing a member for electric conduction, the method comprising:

performing a roughening treatment on at least a part of a surface of a metal member;
forming a first resin member at at least a part of a surface of a metal member that has been subjected to a roughening treatment; and
forming a second resin member that covers a border between the metal member and the first resin member.

In the following, the method A and the method B as described above may be collectively referred to as the method for manufacturing a member for electric conduction.

In a conventional method for manufacturing a member for electric conduction, a portion of a metal member, having a plated layer on an entirety of a surface thereof, is covered with a resin member. Thereafter, only a portion that requires airtightness at a border between the metal member and the resin member is sealed with a curable material (potting process).

In the method of the present invention, the resin member is disposed at a portion at which the metal member has been subjected to a roughening treatment. Therefore, airtightness is sufficiently secured at a broad region including a border between the metal member and the resin member. As a result, it is possible to effectively suppress the occurrence of oil leakage or short circuits. Alternatively, it is possible to omit the potting process for securing airtightness.

The method may further include a process of forming a plated layer to at least a part of a portion of the metal member at which the metal member is not joined to the resin member.

By forming a plated layer to a portion of the metal member at which the metal member is not joined to the resin member, it is possible to suppress corrosion of the metal member and maintain favorable electrical performances. It is noted that since the metal member and the resin member are tightly joined, the plating solution does not permeate the border thereof and does not affect the state of joint.

When a portion of the metal member at which the metal member is not joined to the resin member is subjected to a welding process, it is possible to form a plated layer for welding to a surface of the metal member.

In the method according to the present disclosure, it is possible to save the plating material because a plated layer is formed only to a portion that needs to be plated, as compared with a case of forming a plated layer to the entirety of a surface of the metal member.

In the method according to the present disclosure, a portion of a surface of a metal member to be joined to a resin member is preferably subjected to a roughening treatment without disposing a plated layer having an effect or anti-corrosion or the like, as mentioned above.

Although it depends on the conditions for plating or the type of the resin to be joined, a plated layer generally has an insufficient amount of surface irregularity and tends to exhibit poor joint strength with a resin. Further, in a case of porous plating, which is a plating treatment for improving joint strength, the resin may not sufficiently enter the micro-pores formed by the plating treatment, and may cause a decrease in long-term reliability in joint strength or a decrease in airtightness. In that case, these problems can be solved by performing a plating treatment only to a necessary portion after joining the metal member with the resin member.

The method for performing a roughening treatment on at least a portion of a surface of the metal member may be selected from the methods for a roughening treatment as described above.

The method for disposing a resin material at a portion of a surface of the metal member that has been subjected to a roughening treatment or the method for forming a resin member by solidifying the resin material is not particularly limited, and examples thereof include injection molding, transfer molding, reaction injection molding, blow molding, thermal molding and press molding. Among these methods, injection molding is preferred.

The formation of a plated layer to a portion of the metal member that is not in contact with the resin member may be performed by a known process, such as a wet process (such as electrolytic plating or non-electrolytic plating) in which an object formed of a metal member and a resin member joining each other is immersed in a plating solution) or a dry method (such as vacuum deposition, ion plating or spattering) in which the object is not immersed in a plating solution.

The method according to the present invention may be a method for producing the member for electric conduction according to the present invention.

Specifically, the process for a roughening treatment to at least a portion of a surface of a metal member may be performed such that the specific surface area of the metal member after the roughening treatment is 0.05 $m^2$/g or more.

<Member for electric conduction, motor, secondary battery module and secondary battery package>

The member for electric conduction, motor, secondary battery module and secondary battery package according to the present invention include the member for electric conduction according to the present invention. Therefore, occurrence of oil leakage or short circuit at the member for electric conduction is suppressed and favorable reliability is achieved.

[Examples]

In the following, the embodiments according to the present invention are explained by referring to the Examples. It is noted that the present invention is not limited by the description in the Examples.

<Example 1-1>

A plate of copper alloy (alloy No. C1100 as specified in JIS H3100:2012, thickness: 0.03 cm) was cut into a size of 2 cm in length and 3.5 cm in width, thereby preparing a sample for measuring the specific surface area.
The sample had a geometric surface area of 14.33 $cm^2$, a density of 8.96 $g/cm^3$, a volume of 0.21 $cm^3$, and a mass of 1.8816 g.
A plate of copper alloy (alloy No. C1100 as specified in JIS H3100:2012, thickness: 2 mm) was cut into a size of 45 mm in length and 18 mm in width, thereby preparing a sample for measuring the joint strength.

(Surface roughening treatment)

The sample after defatting was subjected to immersion in AMALPHA A-10201H (Mec Company Ltd.), water washing, and immersion in AMALPHA A-10201P, in this order. Immediately after that, the sample was immersed in AMALPHA A-10201M for 4 minutes. Subsequently, the sample was subjected to water washing, alkali washing (5% by mass NaOH, immersing for 20 seconds), water washing, neutralization (5% by mass $H_2SO_4$, immersing for 20 seconds) and water washing, in this order.

(Measurement of specific surface area)

The specific surface area (SSA) of the sample before performing a surface roughening treatment (after defatting) and the specific surface area of the sample after performing a surface roughening treatment were measured. The results were 0.001062 $m^2/g$ and 0.004443 $m^2/g$, respectively.
The specific surface area was measured using a surface area and pore size distribution analyzer (BELSORP-max, MicrotracBEL). Prior to the measurement, the sample was subjected to vacuum thermal deaeration at 100°C. The adsorption isotherm at a liquid nitrogen temperature (77K) was measured by a krypton adsorption method, and the specific surface area was calculated by a BET method.
The sample for evaluation of joint strength, after being subjected to a roughening treatment, was disposed in a small dumbbell metal insert mold attached to an injection molding machine (J55-AD, the Japan Steel Works, Ltd.) Subsequently, polyphenylene sulfide (PPS, SUSTEEL SGX120, Tosoh Corporation) was injected into a mold at 150°C, thereby preparing a test piece having a resin layer formed on a copper alloy plate. The area of an interface at which the metal member and the resin member are joined was 10 mm $\times$ 50 mm.

<Example 1-2>

A test piece was prepared in the same manner as Example 1-1, except that the resin was changed to polyphenylene sulfide (PPS, SUSTEEL BGX545, Tosoh Corporation).

<Example 1-3>

A test piece was prepared in the same manner as Example 1-1, except that the resin was changed to a polyamide composition 1 (PA1, base resin: 6T/6I, containing acid-modified polyolefin by 3% by mass) and that the temperature of the mold was changed to 170°C.

(Preparation of polyamide composition 1)

1,6-diaminohexane (2800 g, 24.1 mol), terephthalic acid (2774 g, 16.7 mol), isophthalic acid (1196 g, 7.2 mol), benzoic acid (36.6 g, 0.30 mol), sodium hypophosphite monohydrate (5.7 g) and distilled water (545 g) were placed in an autoclave (13.6 L) and subjected to nitrogen substitution. Stirring of the mixture was started at 190°C, and the inner temperature was elevated to 250°C over 3 hours. The inner pressure was increased to 3.03 MPa and the reaction was kept for 1 hour. Subsequently, a low-condensation product was collected by discharging the air from a spray nozzle disposed at the bottom of the autoclave. After cooling to room temperature, the low-condensation product was pulverized to have a particle size of 1.5 mm or less, and dried at 110°C for 24 hours. Subsequently, the low-condensation product was placed in a shelf-type solid phase polymerization apparatus, and after nitrogen substitution, the temperature was elevated to 180°C over 90 minutes. The reaction was kept for 90 minutes, and the temperature was decreased to room temperature. The reaction product was subjected to melt polymerization using a twin screw extruder (screw diameter: 30 mm, L/D=36) at a barrel temperature of 330°C, a number of rotations of screws of 200 rpm, and a rate of resin supply of 6 kg/h, thereby obtaining polyamide (a). The polyamide (a) had a melting point (Tm) of 330°C.

Terephthalic acid (1390 g, 8.4 mol), 1,6-diaminohexane (2800 g, 24.1 mol), isophthalic acid (2581 g, 15.5 mol), benzoic acid (36.6 g, 0.30 mol), sodium hypophosphite monohydrate (5.7 g) and distilled water (545 g) were placed in an autoclave (13.6 L) and subjected to nitrogen substitution. Stirring of the mixture was started at 190°C, and the inner temperature was elevated to 250°C over 3 hours. The inner pressure was increased to 3.02 MPa and the reaction was kept for 1 hour. Subsequently, a low-condensation product was collected by discharging the air from a spray nozzle disposed at the bottom of the autoclave. After cooling to room temperature, the low-condensation product was pulverized to have a particle size of 1.5 mm or less, and dried at 110°C for 24 hours. The moisture content of the low-condensation product was 3000 ppm, and the limiting viscosity [$\eta$] was 0.14 dl/g. The reaction product was subjected to melt polymerization using a twin screw extruder (screw diameter: 30 mm, L/D=36) at a barrel temperature of 330°C, a number of rotations of screws of 200 rpm, and a rate of resin supply of 6 kg/h, thereby obtaining polyamide (b). The polyamide (b) did not exhibit a melting point (Tm).

49.6% by mass of polyamide (a), 12.4% by mass of polyamide (b), 3% by mass of an acid-modified polyolefin synthesized by the following method, and 35% by mass of glass fiber as an inorganic filler (ECS03T-251H, Nippon Electric Glass Co., Ltd,) were mixed with a tumbler blender, and the mixture was subjected to melt polymerization using a twin screw extruder (TEX30$\alpha$, the Japan Steel Works, Ltd.) The temperature of the cylinder was set at a temperature higher than the Tm of polyamide (a) by 15°C. The product was extruded in the shape of strands and cooled in a water tank. Thereafter, the strands were cut with a pelletizer, thereby obtaining polyamide composition 1 in the form of pellets.

(Synthesis of acid-modified polyolefin)

A catalyst solution was prepared by introducing, into a thoroughly nitrogen-substituted glass flask, bis(1,3-dimethylcyclopehtadienyl) zirconium dichloride (0.63 mg), and further adding a toluene solution of methylaluminoxane (Al; 013 mmol/L) (1.57 ml) and toluene (2.43 ml).

Hexane (912 ml) and 1-butene (320 ml) were introduced into a thoroughly nitrogen-substituted stainless autoclave (2 L), and the temperature in the system was elevated to 80°C. Subsequently, triisobutylaluminum (0.9 mmol) and the catalyst solution (2.0 ml, Zr: 0.0005 mmol) prepared above were introduced into the system with pressure, thereby causing polymerization reaction. The total pressure was maintained at 8.0 kg/cm$^2$-G by continuously supplying ethylene, and the polymerization was kept for 30 minutes at 80°C. A small amount of ethanol was introduced into the system to terminate the polymerization, and the unreacted ethylene was purged. The obtained solution was dropped into a large excess of methanol, and a white solid was obtained as a precipitate. The white solid was collected by filtration and dried overnight under reduced pressure, thereby obtaining a white solid (ethylene/1-butene copolymer).

The ethylene/1-butene copolymer (100 parts by mass) was mixed with maleic acid anhydride (0.5 parts by mass) and a peroxide (PERHEXYNE 25B, NOF Corporation, trade name) (0.04 parts by mass). The mixture was subjected to melt graft modification using a monoaxial extruder at 230°C, thereby obtaining an acid-modified polyolefin.

<Example 1-4>

A test piece was prepared in the same manner as Example 1-1, except that the resin was changed to polyamide composition 2 (PA2, base resin: 6T/M5T, containing acid-modified polyolefin by 1% by mass) and that the temperature of the mold was changed to 170°C.

(Preparation of polyamide composition 2)

1,6-diaminohexane (1312 g, 11.1 mol), 2-methyl-1,5-diaminopentane (1312 g, 11.1 mol), terephthalic acid (3655 g, 22.0 mol), benzoic acid (34.2 g, 0.28 mol), sodium hypophosphite monohydrate as a catalyst (5.5 g) and ion-exchange water (640 ml) were introduced into a reactor (1 L) and subjected to nitrogen substitution. The system was reacted for 1 hour at 250°C and 35 kg/cm$^2$. The molar ratio of 1.6-diaminohexane and 2-methyl-1,5-diaminopentane was set at 50:50. One hour after, the reaction product was collected by a receiver in which the pressure was adjusted to be lower by approximately 10 kg/cm$^2$, thereby obtaining a polyamide precursor.

The polyamide precursor was dried and subjected to melt polymerization using a twin screw extruder (temperature of cylinder: 330°C), thereby obtaining polyamide (c). The polyamide (c) had a melting point Tm of 300°C.

57.6% by mass of polyamide (c), 6.4% by mass of polyamide (b), 1% by mass of acid-modified polyolefin, and 35% by mass of glass fiber as an inorganic filler (ECS03T-251H, Nippon Electric Glass Co., Ltd.) were mixed with a tumbler blender, and the mixture was subjected to melt polymerization using a twin screw extruder (TEX30α, the Japan Steel Works, Ltd.) The temperature of the cylinder was set at a temperature higher than the Tm of polyamide (a) by 15°C. The product was extruded in the shape of strands and cooled in a water tank. Thereafter, the strands were cut with a pelletizer, thereby obtaining polyamide composition 2 in the form of pellets.

<Example 1-5>

A test piece was prepared in the same manner as Example 1-1, except that the resin was changed to polyamide composition 3 (PA3, base resin: 6T/6I, containing acid-modified polyolefin by 1% by mass) and that the temperature of the mold was changed to 170°C.

(Preparation of polyamide composition 3)

51.2% by mass of polyamide (a), 12.8 by mass of polyamide (b), 1% by mass of acid-modified polyolefin, and 35% by mass of glass fiber as an inorganic filler (ECS03T-251H, Nippon Electric Glass Co., Ltd.) were mixed with a tumbler blender, and the mixture was subjected to melt polymerization using a twin screw extruder (TEX30α, the Japan Steel Works, Ltd.) The temperature of the cylinder was set at a temperature higher than the Tm of polyamide (a) by 15°C. The product was extruded in the shape of strands and cooled in a water tank. Thereafter, the strands were cut with a pelletizer, thereby obtaining polyamide composition 3 in the form of pellets.

<Comparative Example 1-1>

A test piece was prepared in the same manner as Example 1-3, except that the sample after being subjected to a surface roughening treatment was changed to a sample before being subjected to a surface roughening treatment (after defatting).

<Example 1-6>

A plate of aluminum alloy (alloy No. A5052 as specified in JIS H4000:2014, thickness: 0.03 cm) was cut into a size of 2 cm in length and 3.5 cm in width, thereby preparing a sample for measuring the specific surface area.
The sample had a geometric surface area of 14.33 $cm^2$, a density of 2.68 $g/cm^3$, a volume of 0.21 $cm^3$, and a mass of 0.5628 g.
A plate of aluminum alloy (alloy No. A5052 as specified in JIS H4000:2014, thickness: 2 mm) was cut into a size of 45 mm in length and 18 mm in width, thereby preparing a sample for measuring the joint strength.

(Surface roughening treatment)

The defatted sample was subjected to immersion for 2 minutes in a chamber 1 filled with an alkali-based etching agent (30°C) containing sodium hydroxide (19.0% by mass) and zinc oxide (3.2% by mass), and washed with water. Subsequently, the sample was subjected to immersion for 6 minutes at 30°C, while moving the sample, in a chamber 2 filled with an acid-based etching aqueous solution containing ferric chloride (3.9% by mass), copper(II) chloride (0.2% by mass) and sulfuric acid (4.1% by mass). Hereinafter, this process may be referred to as "treatment 1". Subsequently, the sample was subjected to ultrasonic washing (in water, 1 minute).
The aluminum alloy plate after being subjected to treatment 1 was subjected to immersion for 5 minutes at 40°C, while moving the sample, in a chamber 3 filled with an acid-based etching aqueous solution containing copper (II) oxide (6.3% by mass, $Cu^{2+}$: 5.0% by mass) and nitric acid (30.0% by mass). Hereinafter, this process may be referred to as "treatment 2". After washing with running water, the aluminum alloy plate was dried for 15 minutes at 80°C. The standard electrode potential E0 of $Cu^{2+}$ used in treatment 2 was +0.337 (V vs. SHE).

(Measurement of specific surface area)

The specific surface area of the sample before performing a surface roughening treatment and the specific surface area of the sample after performing a surface roughening treatment were measured by the same method as Example 1-1. The results were 0.0041 $m^2/g$ and 0.2283 $m^2/g$, respectively.
The sample for evaluation of joint strength, after being subjected to a roughening treatment, was disposed in a small dumbbell metal insert mold attached to an injection molding machine (J55-AD, the Japan Steel Works, Ltd.)

Subsequently, polypropylene (PP, PRIME POLYPRO V7100, Prime Polymer Co., Ltd.) was injected into a mold at 110°C, thereby preparing a test piece having a resin layer formed on an aluminum alloy plate.

<Example 1-7>

A test piece was prepared by performing a surface roughening treatment in the same manner as Example 1-6, except that the treatment 2 was not performed.

The specific surface area of the sample after being subjected to a surface roughening treatment was measured by the method as described above, and the result was 0.05518 $m^2$/g.

<Example 1-8>

A test piece was prepared by performing a surface roughening treatment in the same manner as Example 1-6, except that the resin was changed to polybutylene terephthalate (PBT, DURANEX 930HL, Polyplastics Co., Ltd.)

<Example 1-9>

A test piece was prepared by performing a surface roughening treatment in the same manner as Example 1-7, except that the resin was changed to polybutylene terephthalate (PBT, DURANEX 930HL, Polyplastics Co., Ltd.) and that the temperature of the mold was changed to 140°C.

<Comparative Example 1-2>

A test piece was prepared in the same manner as Example 1-6, except that the sample after being subjected to a surface roughening treatment was changed to a sample before being subjected to a surface roughening treatment (after defatting).

<Comparative Example 1-3>

A test piece was prepared in the same manner as Example 1-6, except that the sample after being subjected to a surface roughening treatment was changed to a sample before being subjected to a surface roughening treatment (after defatting), and that the resin was changed to polybutylene terephthalate (PBT, DURANEX 930HL, Polyplastics Co., Ltd.) and the temperature of the mold was changed to 140°C.

<Measurement of linear expansion coefficient>

The linear expansion coefficient of the resin was measured using a thermomechanical analyzer (TMA-SS7100, Seiko Instruments Inc.) by a method as specified in ISO 11359-2 under the following conditions. The results are shown in Table 1. In Table 1, "FD" refers to the flow direction and "OD" refers to the orthogonal direction.

Measurement mode: compression/expansion mode
Temperature range: -40°C to 150°C
Load: 49 mN (5gf)
Rate of temperature elevation: 5°C/min
Atmosphere: nitrogen (100 mL/min)
Probe diameter: 2.9 mm $\varphi$
Number of test: n=1
Vacuum drying: 110°C $\times$ 10 hr

<Thermal shock test>

The test piece was subjected to a thermal shock test under the following conditions. The results are shown in Table 1.

When the rate of decrease in strength is less than 50%, the test piece is regarded as being sufficiently resistant to temperature changes. The "IS 0" in Table 1 indicates that the initial joint strength of the sample before performing the thermal shock test was zero, i.e., the resin member was not joined to the metal member.

The measurement for Examples 1-1 to 1-5 was performed using a thermal shock chamber (TDS-100, Espec Corporation) and the measurement for Examples 1-6 to 1-9 was performed using a thermal shock chamber (TSA-73-EL-A, Espec Corporation) under the following conditions.

Examples 1-1 to 1-5 and Comparative Example 1-1 (using copper alloy)

Temperature range: -40°C to 150°C
Cycle conditions: keep at -40°C for 30 min and keep at 150°C for 30 min in 1 cycle
Number of cycles: 1000

Examples 1-6 to 1-9 and Comparative Examples 1-2 to 1-3 (using aluminum alloy)

Temperature range: -40°C to 85°C
Cycle conditions: keep at -40°C for 30 min and at keep at 85°C for 30 min in 1 cycle
Number of cycles: 1000

<Measurement of joint strength>

The shear strength (MPa) of the test piece for evaluation of joint strength was measured by a method as specified in ISO 19055.
Specifically, a special jig was attached to a tensile tester (Model 1323, Aikoh Engineering Co., Ltd.) and a load at break (N) was measured at room temperature (23°C) at a chuck distance of 60 mm and a tensile rate of 10 mm/min.
The shear strength (MPa) was calculated by dividing the load at break (N) by an area of a portion at which the resin member was joined to the plate of copper alloy or aluminum alloy (50 $mm^2$).

Table 1

| | | Example 1-1 | Example 1-2 | Example 1-3 | Example 1-4 | Example 1-5 | Comp. Example 1-1 | Example 1-6 | Example 1-7 | Example 1-8 | Example 1-9 | Comp. Example 1-2 | Comp. Example 1-3 |
|---|---|---|---|---|---|---|---|---|---|---|---|---|---|
| Metal member | Specific surface area [m$^2$/g] | 0.004443 | 0.004443 | 0.004443 | 0.004443 | 0.004443 | 0.001062 | 0.2283 | 0.05518 | 0.2283 | 0.05518 | 0.0041 | 0.0041 |
| | Mass [g] | 1.8816 | 1.8816 | 1.8816 | 1.8816 | 1.8816 | 1.8816 | 0.5628 | 0.5628 | 0.5628 | 0.5628 | 0.5628 | 0.5628 |
| | True surface area [m$^2$] | 0.008360 | 0.008360 | 0.008360 | 0.008360 | 0.008360 | 0.001998 | 0.128487 | 0.031055 | 0.128487 | 0.031055 | 0.002307 | 0.002307 |
| | Geometric surface area | 0.001433 | 0.001433 | 0.001433 | 0.001433 | 0.001433 | 0.001433 | 0.001433 | 0.001433 | 0.001433 | 0.001433 | 0.001433 | 0.001433 |
| | Roughness index [-] | 5.83 | 5.83 | 5.83 | 5.83 | 5.83 | 1.39 | 89.66 | 21.67 | 89.66 | 21.67 | 1.61 | 1.61 |
| | Density [g/m$^3$] | 8,690,000 | 8,690,000 | 8,690,000 | 8,690,000 | 8,690,000 | 8,690,000 | 2,680,000 | 2,680,000 | 2,680,000 | 2,680,000 | 2,680,000 | 2,680,000 |
| | SSA×Density [m$^{-1}$] | 38,610 | 38,610 | 38,610 | 38,610 | 38,610 | 9,229 | 611,844 | 147,882 | 611,844 | 147,882 | 10,988 | 10,988 |
| | SSA ratio [-] | 4.18 | 4.18 | 4.18 | 4.18 | 4.18 | 1.00 | 55.44 | 13.40 | 55.44 | 13.40 | 1.00 | 1.00 |
| Resin member | Resin type | PPS | PPS | PA 1 | PA 2 | PA 3 | PA 1 | PP | PP | PBT | PBT | PP | PBT |
| | Acid-modified PO | - | - | 3% by mass | 1% by mass | 1% by mass | 3% by mass | - | - | - | - | - | - |
| | Linear expansion coefficient (ppm/K) — FD | 31 | 20 | 16 | 14 | 17 | 16 | 40 | 40 | 20 | 20 | 40 | 20 |
| | Linear expansion coefficient (ppm/K) — OD | 50 | 26 | 64 | 56 | 65 | 64 | 80 | 80 | 90 | 90 | 80 | 90 |
| | Linear expansion coefficient (ppm/K) — Average | 40.5 | 23 | 40 | 35 | 41 | 40 | 60 | 60 | 55 | 55 | 60 | 55 |
| Themal shock test | Rate of decrease [%] | 40.4 | 37.5 | 15.6 | 27.1 | 42.1 | IS 0 | 0.7 | 18.1 | No decrease | 45.7 | IS 0 | IS 0 |
| | Test condition [°C] | -40~150 | -40~150 | -40~150 | -40~150 | -40~150 | - | -40~85 | -40~85 | -40~85 | -40~85 | - | - |
| Joint strength | Shear strength [Mpa] | 44.4 | 40.8 | 18.5 | 39.2 | 24.7 | 0 | 30.3 | 27.9 | 37.4 | 37.6 | 0 | 0 |

<Examples 2-1 to 2-6>

Polyamides (A) to (F) used in Examples 2-1 to 2-6 were prepared by the following methods.

-Synthesis of polyamide (A)-

1,6-diaminohexane (2800 g, 24.1 mol), terephthalic acid (2774 g, 16.7 mol), isophthalic acid (1196 g, 7.2 mol), benzoic acid (36.6 g, 0.30 mol), sodium hypophosphite monohydrate (5.7 g) and distilled water (545 g) were placed in an autoclave (13.6 L) and subjected to nitrogen substitution. Stirring of the mixture was started at 190°C, and the inner temperature was elevated to 250°C over 3 hours. The inner pressure was increased to 3.03 MPa, and the reaction was kept for 1 hour. Subsequently, a low-condensation product was collected by discharging the air from a spray nozzle disposed at the bottom of the autoclave.

After cooling to room temperature, the low-condensation product was pulverized to have a particle size of 1.5 mm or less, and dried at 110°C for 24 hours. Subsequently, the low-condensation product was placed in a shelf-type solid phase polymerization apparatus, and after nitrogen substitution, the temperature was elevated to 180°C over 90 minutes. The reaction was kept for 90 minutes, and the temperature was decreased to room temperature. The reaction product was subjected to melt polymerization using a twin screw extruder (screw diameter: 30 mm, L/D=36) at a barrel temperature of 330°C, a number of rotations of screws of 200 rpm, and a rate of resin supply of 6 kg/h, thereby obtaining polyamide (a). The polyamide (a) had a melting point (Tm) of 330°C.

50% by mass of polyamide (a) and 50% by mass of glass fiber as an inorganic filler (FT756D, Owens Corning Corporation) were mixed with a tumbler blender, and the mixture was subjected to melt polymerization using a twin screw extruder (TEX30$\alpha$, the Japan Steel Works, Ltd.) The temperature of the cylinder was set at a temperature higher than the Tm of polyamide (a) by 15°C. The product was extruded in the shape of strands and cooled in a water tank. Thereafter, the strands were cut with a pelletizer, thereby obtaining polyamide (A) in the form of pellets. The combination of dicarboxylic acid and diamine, glass transition temperature (Tg) and crystallization temperature (Tc) of polyamide (A) are shown in Table 2.

-Synthesis of polyamide (B)-

Terephthalic acid (1390 g, 8.4 mol), 1,6-diaminohexane (2800 g, 24.1 mol), isophthalic acid (2581 g, 15.5 mol), benzoic acid (36.6 g, 0.30 mol), sodium hypophosphite monohydrate (5.7 g) and distilled water (545 g) were placed in an autoclave (13.6 L) and subjected to nitrogen substitution. Stirring of the mixture was started at 190°C, and the inner temperature was elevated to 250°C over 3 hours. The inner pressure was increased to 3.02 MPa and the reaction was kept for 1 hour. Subsequently, a low-condensation product was collected by discharging the air from a spray nozzle disposed at the bottom of the autoclave. After cooling to room temperature, the low-condensation product was pulverized to have a particle size of 1.5 mm or less, and dried at 110°C for 24 hours. The moisture content of the low-condensation product was 3000 ppm, and the limiting viscosity [η] was 0.14 dl/g. The reaction product was subjected to melt polymerization using a twin screw extruder (screw diameter: 30 mm, L/D=36) at a barrel temperature of 330°C, a number of rotations of screws of 200 rpm, and a rate of resin supply of 6 kg/h, thereby obtaining polyamide (b). The polyamide (b) did not exhibit a melting point (Tm).

40% by mass of polyamide (a), 10% by mass of polyamide (b) and 50% by mass of glass fiber as an inorganic filler (FT756D, Owens Corning Corporation) were mixed with a tumbler blender, and the mixture was subjected to melt polymerization using a twin screw extruder (TEX30$\alpha$, the Japan Steel Works, Ltd.) The temperature of the cylinder was set at a temperature higher than the Tm of polyamide (a) by 15°C. The product was extruded in the shape of strands and cooled in a water tank. Thereafter, the strands were cut with a pelletizer, thereby obtaining polyamide (B) in the form of pellets. The combination of dicarboxylic acid and diamine, glass transition temperature (Tg) and crystallization temperature (Tc) of polyamide (B) are shown in Table 2.

-Synthesis of polyamide (C)-

1,6-diaminohexane (1312 g, 11.1 mol), 2-methyl-1,5-diaminopentane (1312 g, 11.1 mol), terephthalic acid (3655 g, 22.0 mol), benzoic acid (34.2 g, 0.28 mol), sodium hypophosphite monohydrate as a catalyst (5.5 g, $5.2 \times 10^{-2}$ mol) and ion-exchange water (640 ml) were introduced into a reactor (1 L) and subjected to nitrogen substitution. The system was reacted for 1 hour at 250°C and 35 kg/cm$^2$. The molar ratio of 1,6-diaminohexane and 2-methyl-1,5-diaminopentane was set at 50:50. One hour after, the reaction product was collected by a receiver in which the pressure was adjusted to be lower by approximately 10 kg/cm$^2$, thereby obtaining a polyamide precursor. The polyamide precursor was dried and subjected to melt polymerization using a twin screw extruder (temperature of cylinder: 330°C), thereby obtaining polyamide resin (c). The polyamide resin (c) had a melting point Tm of 300°C.

50% by mass of polyamide (c) and 50% by mass of glass fiber as an inorganic filler (FT756D, Owens Corning Corporation) were mixed with a tumbler blender, and the mixture was subjected to melt polymerization using a twin screw extruder (TEX30α, the Japan Steel Works, Ltd.) The temperature of the cylinder was set at a temperature higher than the Tm of polyamide (c) by 15°C. The product was extruded in the shape of strands and cooled in a water tank. Thereafter, the strands were cut with a pelletizer, thereby obtaining polyamide (C) in the form of pellets. The combination of dicarboxylic acid and diamine, glass transition temperature (Tg) and crystallization temperature (Tc) of polyamide (C) are shown in Table 2.

-Synthesis of polyamide (D)-

Terephthalic acid (1787 g, 13.1 mol), 1,6-diaminoihexane (2800 g, 24.1 mol), adipic acid (1921 g, 10.8 mol), benzoic acid (36.6 g, 0.30 mol), sodium hypophosphite monohydrate (5.7 g) and distilled water (554 g) were placed in an autoclave (13.6 L) and subjected to nitrogen substitution. Stirring of the mixture was started at 190°C, and the inner temperature was elevated to 250°C over 3 hours. The inner pressure was increased to 3.01 MPa and the reaction was kept for 1 hour. Subsequently, a low-condensation product was collected by discharging the air from a spray nozzle disposed at the bottom of the autoclave.

After cooling to room temperature, the low-condensation product was pulverized to have a particle size of 1.5 mm or less, and dried at 110°C for 24 hours. Subsequently, the low-condensation product was placed in a shelf-type solid phase polymerization apparatus, and after nitrogen substitution, the temperature was elevated to 220°C over 90 minutes. The reaction was kept for 60 minutes, and the temperature was decreased to room temperature. The reaction product was subjected to melt polymerization using a twin screw extruder (screw diameter: 30 mm, L/D=36) at a barrel temperature of 330°C, a number of rotations of screws of 200 rpm and a rate of resin supply of 6 kg/h, thereby obtaining polyamide (d). The polyamide (d) had a melting point (Tm) of 310°C.

52% by mass of polyamide (d), 13% by mass of polyamide (b) and 35% by mass of glass fiber as an inorganic filler (FT756D, Owens Corning Corporation) were mixed with a tumbler blender, and the mixture was subjected to melt polymerization using a twin screw extruder (TEX30α, the Japan Steel Works, Ltd.) The temperature of the cylinder was set at a temperature higher than the Tm of polyamide (d) by 15°C. The product was extruded in the shape of strands and cooled in a water tank. Thereafter, the strands were cut with a pelletizer, thereby obtaining polyamide (D) in the form of pellets. The combination of dicarboxylic acid and diamine, glass transition temperature (Tg) and crystallization temperature (Tc) of polyamide (D) are shown in Table 2.

-Synthesis of polyamide (E)-

40% by mass of polyamide (c), 10% by mass of polyamide (b) and 50% by mass of glass fiber as an inorganic filler (FT756D, Owens Corning Corporation) were mixed with a tumbler blender, and the mixture was subjected to melt polymerization using a twin screw extruder (TEX30α, the Japan Steel Works, Ltd.) The temperature of the cylinder was set at a temperature higher than the Tm of polyamide (c) by 15°C. The product was extruded in the shape of strands and cooled in a water tank. Thereafter, the strands were cut with a pelletizer, thereby obtaining polyamide (E) in the form of pellets. The combination of dicarboxylic acid and diamine, glass transition temperature (Tg) and crystallization temperature (Tc) of polyamide (E) are shown in Table 2.

-Synthesis of polyamide (F)-

Terephthalic acid (4537.7 g, 27.3 mol), a mixture of 1,9-nonanediamine and 2-methyl-1,8-octanediamine [1,9-nonanediamine/2-methyl-1,8-octanediamine =80/20 (molar ratio)] (4385 g, 27.5 mol), benzoic acid (41.5 g, 0.34 mol), sodium hypophosphite monohydrate (9.12 g, 0.1% by mass with respect to total amount of raw materials) and ion-exchange water (2500 ml) were introduced into an autoclave (20 L) and subjected to nitrogen substitution.

The mixture was stirred at 100°C for 30 minutes, and the inner temperature was elevated to 220°C over 2 hours. The inner pressure was increased to 2 MPa. The reaction was kept for 2 hours, and the temperature was elevated to 230°C. The reaction was kept for 2 hours at 230°C while maintaining the inner pressure at 2 MPa by gradually releasing water vapor.

Subsequently, the pressure was decreased to IMPa over 30 minutes, and the reaction was kept for 1 hour, thereby obtaining a prepolymer. The prepolymer was dried at 100°C for 12 hours under reduced pressure, and pulverized to have a particle size of 2 mm or less. The pulverized prepolymer was subjected to solid-phase polymerization for 10 hours at 230°C and 13 Pa (0.1 mmHg), thereby obtaining polyamide (f). The polyamide (f) had a melting point (Tm) of 300°C.

70% by mass of polyamide (f) and 30% by mass of glass fiber as an inorganic filler (FT756D, Owens Corning Corporation) were mixed with a tumbler blender, and the mixture was subjected to melt polymerization using a twin screw extruder (TEX30α, the Japan Steel Works, Ltd.) The temperature of the cylinder was set at a temperature higher than the Tm of polyamide (f) by 15°C. The product was extruded in the shape of strands and cooled in a water tank. Thereafter, the strands were cut with a pelletizer, thereby obtaining polyamide (F) in the form of pellets. The combination of dicarboxylic acid and diamine, glass transition temperature (Tg) and crystallization temperature (Tc) of polyamide (F) are shown in Table 2.

(Preparation of test piece)

A plate of aluminum alloy (alloy No. A5052 as specified in JIS H4000:2014, thickness: 2.0 cm) was cut into a size of 45 mm in length and 18 mm in width, thereby preparing a sample for measuring the specific surface area.

A plate of aluminum alloy (alloy No. A5052 as specified in JIS H4000:2014, thickness: 2.0 cm) was cut into a 50-mm square, thereby preparing a sample for measuring the He leakage.

The aluminum alloy test pieces were defatted and subjected to immersion for 2 minutes in a chamber filled with an alkali-based etching agent (30°C) containing sodium hydroxide (19.0% by mass) and zinc oxide (3.2% by mass), and washed with water. Subsequently, the test pieces were subjected to immersion for 6 minutes at 30°C, while moving the test pieces, in a chamber filled with an acid-based etching aqueous solution containing ferric chloride (3.9% by mass), copper(II) chloride (0.2% by mass) and sulfuric acid (4.1% by mass). Subsequently, the sample were subjected to ultrasonic washing (in water, 1 minute).

(Measurement of shear strength)

The sample for evaluation of joint strength was disposed in a small dumbbell metal insert mold attached to an injection molding machine (J55-AD, the Japan Steel Works, Ltd.) Subsequently, the synthesized polyamide was injected into a mold under the condition of temperature of cylinder: 335°C, temperature of mold: 180°C, primary injection pressure: 90 MPa, maintained pressure: 80 MPa, rate of injection: 25 mm/second, thereby obtaining a test piece in which a resin layer is formed on an aluminum plate.

The shear strength (MPa) of the test piece for evaluation of joint strength was measured by a method as specified in ISO 19055.

Specifically, a special jig was attached to a tensile tester (Model 1323, Aikoh Engineering Co., Ltd.) and a load at break (N) was measured at room temperature (23°C) at a chuck distance of 60 mm and a tensile rate of 10 mm/min.

The shear strength (MPa) was calculated by dividing the load at break (N) by an area of a portion at which the resin member was joined to the plate of copper alloy or aluminum alloy ($50 \text{ mm}^2$).

After the measurement of the shear strength, an interface at the metal-member side was observed and evaluated by the following criteria.

The resin remains by 30% or more of the total area of the interface: "material breaks"

The resin remains by less than 30% of the total area of the interface: "material partially breaks"

The resin is not visually observed at the interface: "separate at interface".

The results of the measurement of shear strength and the evaluation of the state of the interface are shown in Table 2.

(He leakage)

The test piece for evaluation of He leakage obtained by the method as mentioned above was disposed at a He-leakage metal insert mold attached to an injection molding machine (J55-AD, Japan Steel Works, Ltd.) Subsequently, the synthesized polyamide was injected into the mold under the conditions of temperature of cylinder: 335°C, temperature of mold: 180°C, primary injection pressure: 90 MPa, maintained pressure: 80 MPa, rate of injection: 25 mm/second, thereby obtaining a test piece in which a resin layer is formed on an aluminum plate.

The He leakage of the test piece was evaluated by a method as specified in ISO 19095. Specifically, the test piece was set at a sealable special jig, and He gas was introduced into the sealed space at a pressure of 0.1 MPa. The amount of the He gas permeating the test piece was measured by a Sniffer method using a He gas detector (HELEN M-222LD, Canon Anelva Corporation. The results are shown in Table 2. In Table 2, "○" indicates that the amount of He gas detected within 5 minutes from the start of the detection is $10^{-6}$ [Pa·m$^3$/s] or less, and "×" indicates that the amount of He gas detected within 5 minutes from the start of the detection is more than $10^{-6}$ [Pa·m$^3$/s].

(Tracking resistance)

The test piece having a size of 100 mm $\times$ 100 mm $\times$ 3 mm was prepared from the synthesized polyamide. The tacking resistance of the test piece was evaluated by a method as specified in IEC 60112. The results are shown in Table 2.

<Comparative Example 2-1>

A test piece was prepared in the same manner as Example 2-1, except that the resin was changed to polyphenylene sulfide (SUSTEEL SGX120, Tosoh Corporation) and that the temperature of cylinder and the temperature of mold were changed to 310°C and 160°C, respectively. The result of the evaluation of shear strength, He leakage and tracking resistance are shown in Table 2.

<Comparative Example 2-2>

A test piece was prepared in the same manner as Comparative Example 2-1, except that the resin was changed to polyphenylene sulfide (SUSTEEL BGX545, Tosoh Corporation). The result of the evaluation of shear strength, He leakage and tracking resistance are shown in Table 2.

<Comparative Example 2-3>

A test piece was prepared in the same manner as Comparative Example 2-1, except that the resin was changed to a total aliphatic polyamide (PA66) (ULTRAMID A3WG10, BASF SE) and that the temperature of cylinder and the temperature of mold were changed to 300°C and 160°C, respectively. The result of the evaluation of shear strength, He leakage and tracking resistance are shown in Table 2.

Table 2

| | | | Example 2-1 | Example 2-2 | Example 2-3 | Example 2-4 | Example 2-5 | Example 2-6 |
|---|---|---|---|---|---|---|---|---|
| Resin | | | Polyamide(A) | Polyamide(B) | Polyamide(C) | Polyamide (D) | Polyamide (E) | Polyamide(F) |
| Thermal characteristics | Glass transition temperature Tg [°C] | | 124 | 123 | 132 | 90 | 130 | 125 |
| | Crystallization temperature Tc [°C] | | 295 | 282 | 281 | 265 | 269 | 276 |
| Mol% | Dicarboxylic acid | Terephthalic acid | 70.0 | 62.0 | 100.0 | 50.0 | 86.0 | 100.0 |
| | | Isophthalic acid | 30.0 | 38.0 | | 14.0 | 14.0 | |
| | | Adipic acid | | | | 36.0 | | |
| | Diamine | Hexamethylenediamine | 100.0 | 100.0 | 50.0 | 100.0 | 60.0 | |
| | | 2-methyl-1,5-pentadiamine | | | 50.0 | | 40.0 | |
| | | Nonamethylenediamine | | | | | | 80.0 |
| | | 2-methyl-1,8-octanediamine | | | | | | 20.0 |
| Results | Shear strength [Mpa] | | 42.3 | 72.7 | 67.6 | 56 | 73.5 | 32.5 |
| | State of breakage | | Material Partially Breaks | Material Breaks | Material Breaks | Material Breaks | Material Breaks | Material Partially Breaks |
| | He Leakage | | ○ | ○ | ○ | ○ | ○ | ○ |
| | Tracking resistance | | > 600V | > 600V | > 600V | > 600V | > 600V | > 600V |

(continued)

| | | Example 2-1 | Example 2-2 | Example 2-3 | Example 2-4 | Example 2-5 | Example 2-6 |
|---|---|---|---|---|---|---|---|
| | | Comp. Example 2-1 | Comp. Example 2-2 | Comp. Example 2-3 | | | |
| Resin | | PPS | PPS | PA66 | | | |
| Thermal characteristics | Glass transition temperature Tg [°C] | 83 | 94 | 52 | | | |
| | Crystallization temperature Tc [°C] | 240 | 219 | 232 | | | |
| Mol% | Dicarboxylic acid — Terephthalic acid | | | | | | |
| | Dicarboxylic acid — Isophthalic acid | | | | | | |
| | Dicarboxylic acid — Adipic acid | | | 100.0 | | | |
| | Diamine — Hexamethylenediamine | | | 100.0 | | | |
| | Diamine — 2-methyl-1,5-pentadiamine | | | | | | |
| | Diamine — Nonamethylenediamine | | | | | | |
| | Diamine — 2-methyl-1,8-octanediamine | | | | | | |
| Results | Shear strength [Mpa] | 43.2 | 43.1 | 4.9 | | | |
| | State of breakage | Material Breaks | Material Breaks | Separates at interface | | | |
| | He Leakage | ○ | ○ | × | | | |
| | Tracking resistance | 125V | 150V | 450V | | | |

As shown in Table 2, the Examples in which a polyamide having an aromatic group and an aliphatic group exhibit excellent results in the evaluation of shear strength, He leakage and tracking resistance.
Comparative Examples 2-1 and 2-2, in which polyphenylene sulfide is used as the resin, exhibit insufficient tracking resistance as a member for electric conduction, while exhibiting excellent shear strength and He leakage.
Comparative Examples 2-3, in which a total aliphatic polyamide is used as the resin, exhibit insufficient shear strength and He leakage, while exhibiting excellent tracking resistance.

**Claims**

1. A member for electric conduction, comprising a metal member and a resin member that is joined to at least a part of a surface of the metal member,
the metal member having a roughness index, which is obtained by dividing a true surface area (m$^2$) measured by a krypton adsorption method by a geometric surface area (m$^2$), of 4.0 or more.

2. The member for electric conduction according to claim 1, wherein the roughness index of the metal member is 10.0 or more.

3. The member for electric conduction according to claim 1 or claim 2, wherein the roughness index of the metal member is less than 10.0, and the resin member comprises a resin having a linear expansion coefficient of 50 ppm/K or less.

4. The member for electric conduction according to any one of claim 1 to claim 3, wherein the resin member comprises a polyamide resin having an aromatic group and an aliphatic group.

5. The member for electric conduction according to claim 4, wherein the resin member further comprises an acid-modified polyolefin.

6. The member for electric conduction according to claim 4 or claim 5, wherein the polyamide resin comprises a p-phenylene group as the aromatic group and an aliphatic group having from 4 to 20 carbon atoms as the aliphatic group.

7. The member for electric conduction according to any one of claim 4 to claim 6, wherein the polyamide resin comprises at least two kinds of the aromatic group or at least two kinds of the aliphatic group.

8. The member for electric conduction according to any one of claim 4 to claim 7, wherein the polyamide resin comprises an m-phenylene group as the aromatic group.

9. The member for electric conduction according to any one of claim 4 to claim 8, wherein the polyamide resin comprises a side-chain alkylene group having from 4 to 20 carbon atoms as the aliphatic group.

10. The member for electric conduction according to any one of claim 4 to claim 9, wherein the polyamide resin comprises, with respect to a total of 100 mol% of the aromatic group, from 40 mol% to 100 mol% of a p-phenylene group and from 0 mol% to 60 mol% of an m-phenylene group.

11. The member for electric conduction according to any one of claim 4 to claim 10, wherein the polyamide resin comprises, with respect to a total of 100 mol% of the aliphatic group, from 0 mol% to 60 mol% of a side-chain alkylene group having from 4 to 20 carbon atoms.

12. The member for electric conduction according to any one of claim 1 to claim 11, wherein the metal member comprises at least one metal selected from the group consisting of copper, aluminum, copper alloy and aluminum alloy.

13. The member for electric conduction according to any one of claim 1 to claim 12, wherein the metal member has a plated layer at at least a portion at which the metal member is not joined to the resin member.

14. The member for electric conduction according to any one of claim 1 to claim 13, wherein the metal member does not have a plated layer at a portion at which the metal member is joined to the resin member.

15. The member for electric conduction according to any one of claim 1 to claim 14, wherein the resin member comprises a first resin member that is joined to at least a part of a surface of the metal member, and a second resin member that covers a border between the metal member and the first resin member.

16. A method for manufacturing a member for electric conduction, the method comprising:

    performing a roughening treatment on at least a part of a surface of a metal member; and
    forming a resin member at at least a part of the surface of the metal member that has been subjected to the roughening treatment.

17. A method for manufacturing a member for electric conduction, the method comprising:

    performing a roughening treatment on at least a part of a surface of a metal member;
    forming a first resin member at at least a part of a surface of a metal member that has been subjected to a roughening treatment; and
    forming a second resin member that covers a border between the metal member and the first resin member.

18. The method for manufacturing a member for electric conduction according to claim 16 or claim 17, the method further comprising applying a plated layer to at least a part of a portion of the metal member at which the metal member is not joined to the resin member.

19. An electric conversion device, comprising the member for electric conduction according to any one of claim 1 to claim 15.

20. A motor, comprising the member for electric conduction according to any one of claim 1 to claim 15.

21. A secondary battery module, comprising the member for electric conduction according to any one of claim 1 to claim 15.

22. A secondary battery pack, comprising the member for electric conduction according to any one of claim 1 to claim 15.

# FIG. 1

# FIG. 2

**INTERNATIONAL SEARCH REPORT**

| International application No. |
|---|
| PCT/JP2021/003378 |

A. CLASSIFICATION OF SUBJECT MATTER
H01B 7/00(2006.01)i; H01B 13/00(2006.01)i; H01M 50/50(2021.01)i; H02K 3/30(2006.01)i; H02K 3/38(2006.01)i; H02K 3/50(2006.01)i
FI: H01B7/00 302; H01B13/00 501A; H01B13/00 515; H01M2/20 A; H02K3/30; H02K3/38 A; H02K3/50 A

According to International Patent Classification (IPC) or to both national classification and IPC

B. FIELDS SEARCHED

Minimum documentation searched (classification system followed by classification symbols)
H01B7/00; H01B13/00; H01M50/50; H02K3/30; H02K3/38; H02K3/50

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2019/082983 A1 (MITSUI CHEMICALS, INC.) 02 May 2019 (2019-05-02) paragraph [0004] | 16<br>18<br>1-15, 17, 19-22 |
| Y<br>A | JP 2018-195490 A (MITSUBISHI MOTORS CORPORATION) 06 December 2018 (2018-12-06) paragraphs [0021]-[0022], fig. 2 | 18<br>1-17, 19-22 |
| A | JP 2019-153501 A (MITSUBISHI MATERIALS CORP.) 12 September 2019 (2019-09-12) | 1-22 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 April 2021 (14.04.2021) | 27 April 2021 (27.04.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

32

**INTERNATIONAL SEARCH REPORT**
Information on patent family members

| International application No. |
| --- |
| PCT/JP2021/003378 |

| Patent Documents referred in the Report | Publication Date | Patent Family | Publication Date |
| --- | --- | --- | --- |
| WO 2019/082983 A1 | 02 May 2019 | US 2020/0254728 A1 paragraph [0004] EP 3702149 A1 JP 6778334 B2 CN 111225792 A KR 10-2020-0055762 A | |
| JP 2018-195490 A | 06 Dec. 2018 | (Family: none) | |
| JP 2019-153501 A | 12 Sep. 2019 | US 2020/0395146 A1 EP 3764371 A1 WO 2019/172120 A1 CN 111801744 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007209101 A
- JP 4020957 B
- JP 4541153 B
- WO 20158847 A
- WO 200931632 A
- JP 2008162115 A
- JP 2004346273 A